(19) Europäisches Patentamt
European Patent Office
Office européen des brevets

(11) **EP 4 496 314 A1**

(12) **EUROPEAN PATENT APPLICATION**
published in accordance with Art. 153(4) EPC

(43) Date of publication:
**22.01.2025 Bulletin 2025/04**

(21) Application number: **22931820.9**

(22) Date of filing: **30.11.2022**

(51) International Patent Classification (IPC):
*H04N 19/52* *(2014.01)*

(52) Cooperative Patent Classification (CPC):
**H04N 19/176; H04N 19/105; H04N 19/139;
H04N 19/159; H04N 19/52; H04N 19/521**

(86) International application number:
**PCT/CN2022/135499**

(87) International publication number:
**WO 2023/173809 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.03.2022 CN 202210260543**

(71) Applicant: **Tencent Technology (Shenzhen)
Company Limited
Shenzhen, Guangdong, 518057 (CN)**

(72) Inventor: **WANG, Yingbin
Shenzhen, Guangdong 518057 (CN)**

(74) Representative: **Nederlandsch Octrooibureau
P.O. Box 29720
2502 LS The Hague (NL)**

(54) **VIDEO ENCODING METHOD AND APPARATUS, VIDEO DECODING METHOD AND APPARATUS, AND STORAGE MEDIUM, ELECTRONIC DEVICE AND COMPUTER PROGRAM PRODUCT**

(57)      Provided in the embodiments of the present application are a video encoding method and apparatus, a video decoding method and apparatus, and a storage medium, an electronic device and a computer program product. The video decoding method comprises: according to a reference frame, generating a predictive vector candidate list for a displacement vector of a decoded block of the current frame; selecting, from the predictive vector candidate list, a predictive vector of the current block to be decoded; and decoding the current block on the basis of the predictive vector of the current block.

| | S910 |
|---|---|
| Generate a prediction vector candidate list according to displacement vectors of a decoded block whose reference frame is a current frame | |

↓

| | S920 |
|---|---|
| Select a prediction vector of a to-be-decoded current block from the prediction vector candidate list | |

↓

| | S930 |
|---|---|
| Decode the current block based on the prediction vector of the current block | |

FIG. 9

**Description**

RELATED APPLICATION

This application claims priority to Chinese Patent Application No. 202210260543.1 filed on March 16, 2022, which is incorporated by reference in its entirety.

FIELD OF THE TECHNOLOGY

The present disclosure relates to the field of computers and communication technologies, and in particular, to a video encoding and decoding method and apparatus, a storage medium, an electronic device, and a computer program product.

BACKGROUND OF THE DISCLOSURE

In the related audio-video encoding and decoding technology, if a code stream does not include a prediction vector of a current block, one or more default prediction vectors may be derived. If these default prediction vectors are not selected properly, encoding performance may be affected.

SUMMARY

Embodiments of the present disclosure provide a video encoding and decoding method and apparatus, a computer readable storage medium, an electronic device, and a computer program product. To some extent, a more suitable prediction vector candidate list may be constructed according to displacement vectors of a decoded block whose reference frame is a current frame, so as to ensure that a more accurate prediction vector is selected therefrom, thereby improving encoding performance.

An embodiment of the present disclosure provides a video decoding method, including: generating a prediction vector candidate list according to displacement vectors of a decoded block whose reference frame is a current frame; selecting a prediction vector of a to-be-decoded current block from the prediction vector candidate list; and decoding the current block based on the prediction vector of the current block.

An embodiment of the present disclosure provides a video encoding method, including: generating a prediction vector candidate list according to displacement vectors of an encoded block whose reference frame is a current frame; selecting a prediction vector of a to-be-coded current block from the prediction vector candidate list; and encoding the current block based on the prediction vector of the current block.

An embodiment of the present disclosure provides a video decoding apparatus, including: a first generation unit, configured to generate a prediction vector candidate list according to displacement vectors of a decoded block whose reference frame is a current frame; a first selection unit, configured to select a prediction vector of a to-be-decoded current block from the prediction vector candidate list; and a first processing unit, configured to decode the current block based on the prediction vector of the current block.

An embodiment of the present disclosure provides a video encoding apparatus, including: a second generation unit, configured to generate a prediction vector candidate list according to displacement vectors of an encoded block whose reference frame is a current frame; a second selection unit, configured to select a prediction vector of a to-be-coded current block from the prediction vector candidate list; and a second processing unit, configured to code the current block based on the prediction vector of the current block.

An embodiment of the present disclosure provides a computer readable storage medium, where a computer program is stored in the computer readable storage medium, and the computer program is executed by a processor to implement the method in the foregoing embodiment.

An embodiment of the present disclosure provides an electronic device, including one or more processors and a memory, configured to store one or more programs, so that the electronic device implements the method in the foregoing embodiment when the one or more programs are executed by the one or more processors.

An embodiment of the present disclosure provides a computer program product or a computer program. The computer program product or the computer program includes computer instructions, and the computer instructions are stored in a computer readable storage medium. A processor of a computer device reads the computer instructions from the computer readable storage medium, and the processor executes the computer instructions, so that the computer device performs the method provided in the foregoing.

The technical solutions provided in the embodiments of the present disclosure may bring the following beneficial effects:

A prediction vector candidate list is generated according to displacement vectors of a decoded block whose reference frame is a current frame, and further, a prediction vector of a current block is selected from the prediction vector candidate list, so that a more suitable prediction vector candidate list can be constructed according to the displacement vectors of the decoded block whose reference frame is the current frame, thereby ensuring that a more accurate prediction vector is selected therefrom, thereby improving encoding performance.

BRIEF DESCRIPTION OF THE DRAWINGS

FIG. 1 illustrates a schematic diagram of an example system architecture according to an embodiment of the present disclosure.

FIG. 2 illustrates a schematic diagram of a manner of placing a video encoding apparatus and a video decoding apparatus in a streaming system according to an embodiment of the present disclosure.

FIG. 3 illustrates a schematic diagram of a relationship between an SB and a B according to an embodiment of the present disclosure.

FIG. 4 illustrates a basic flowchart of a video coder according to an embodiment of the present disclosure.

FIG. 5 illustrates a schematic diagram of inter-frame prediction according to an embodiment of the present disclosure.

FIG. 6 illustrates a schematic diagram of intra-frame block replication according to an embodiment of the present disclosure.

FIG. 7 illustrates a schematic diagram of a reference range of an IBC in AV1 according to an embodiment of the present disclosure.

FIG. 8 illustrates a schematic diagram of a reference range of an IBC in AV2 according to an embodiment of the present disclosure.

FIG. 9 illustrates a flowchart of a video decoding method according to an embodiment of the present disclosure.

FIG. 10 illustrates a schematic diagram of selecting a decoded block adjacent to a current block according to an embodiment of the present disclosure.

FIG. 11 illustrates a flowchart of a video decoding method according to an embodiment of the present disclosure.

FIG. 12 illustrates a flowchart of a video encoding method according to an embodiment of the present disclosure.

FIG. 13 illustrates a block diagram of a video decoding apparatus according to an embodiment of the present disclosure.

FIG. 14 illustrates a block diagram of a video encoding apparatus according to an embodiment of the present disclosure.

FIG. 15 illustrates a schematic structural diagram of a computer system of an electronic device according to an embodiment of the present disclosure.

DESCRIPTION OF EMBODIMENTS

Example implementations are now described in a more comprehensive manner with reference to the accompanying drawings. However, the example implementations can be implemented in various forms and are not to be construed as limited to these examples. On the contrary, the purpose of providing these implementations is to make the present disclosure more comprehensive and complete, and convey the concept of the example implementations to a person skilled in the art in a comprehensive manner.

In the following description, the term "some embodiments" describes subsets of all possible embodiments, but it may be understood that "some embodiments" may be the same subset or different subsets of all the possible embodiments, and can be combined with each other without conflict.

In addition, the described features, structures or characteristics in the present disclosure may be combined in one or more embodiments in any appropriate manner. The following description has many details, so that the embodiments of the present disclosure can be fully understood. However, a person skilled in the art is to realize that during implementing of the technical solutions of the present disclosure, not all the detailed features in the embodiments may be required, and one or more specific details may be omitted, or another method, element, apparatus, step, or the like may be used.

The block diagrams shown in the accompanying drawings are merely functional entities and do not necessarily correspond to physically independent entities. That is, the functional entities may be implemented in a software form, or in one or more hardware modules or integrated circuits, or in different networks and/or processor apparatuses and/or microcontroller apparatuses.

The flowcharts shown in the accompanying drawings are merely exemplary descriptions, do not need to include all content and operations/steps, and do not need to be performed in the described orders either. For example, some operations/steps may be further divided, while some operations/steps may be combined or partially combined. Therefore, an actual execution order may change according to an actual case.

"Plurality of" mentioned in the specification means two or more. "And/or" describes an association relationship of an associated object, indicating that three relationships may exist. For example, A and/or B may indicate three cases: A exists alone, both A and B exist, and B exist alone. The character "/" generally indicates an "or" relationship between associated objects before and after the character.

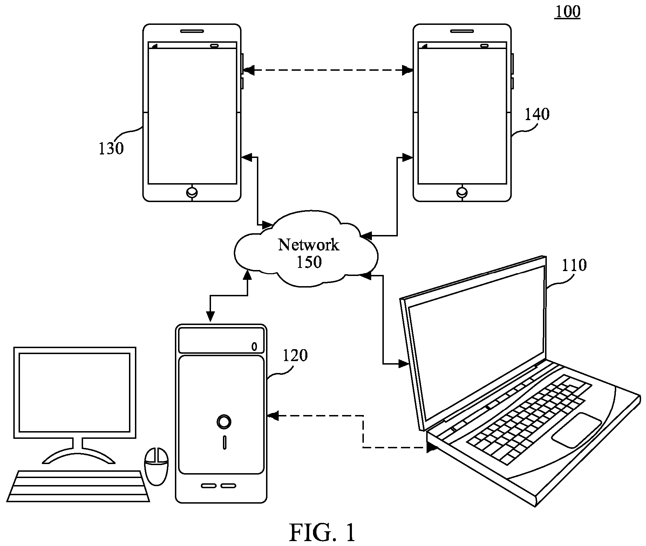

FIG. 1 illustrates a schematic diagram of an example system architecture of a technical solution according to an embodiment of the present disclosure.

As shown in FIG. 1, a system architecture 100 includes a plurality of terminal apparatuses that may communicate with each other by using, for example, a network 150. For example, the system architecture 100 may include a first terminal apparatus 110 and a second terminal apparatus 120 that are interconnected by using the network 150. In the embodiment of FIG. 1, the first terminal apparatus 110 and the second terminal apparatus 120 perform unidirectional data transmission.

For example, the first terminal apparatus 110 may encode video data (for example, a video picture stream collected by the terminal apparatus 110) to be transmitted to the second terminal apparatus 120 by using the network 150. The encoded video data is transmitted in one or more encoded video code streams. The second terminal apparatus 120 may receive the encoded video data from the network 150, decode the encoded video data to recover the video data, and display the video picture according to the recovered video data.

In an embodiment of the present disclosure, the system architecture 100 may include a third terminal apparatus 130 and a fourth terminal apparatus 140 that perform bidirectional transmission of encoded video data, where the bidirectional transmission may occur, for example, during a video conference. For bidirectional data transmission, each terminal apparatus in the third terminal apparatus 130 and the fourth terminal apparatus 140 may code video data (for example, a video picture stream collected by the terminal apparatus), so as to transmit the video data to the other terminal apparatus in the third terminal apparatus 130 and the fourth terminal apparatus 140 by using the network 150. Each terminal apparatus in the third terminal apparatus 130 and the fourth terminal apparatus 140 may further receive the encoded video data transmitted by the other terminal apparatus in the third terminal apparatus 130 and the fourth terminal apparatus 140, decode the encoded video data to recover the video data, and display the video picture on an accessible display apparatus according to the recovered video data.

In the embodiment shown in FIG. 1, the first terminal apparatus 110, the second terminal apparatus 120, the third terminal apparatus 130, and the fourth terminal apparatus 140 may be servers or terminals. However, a principle disclosed in the present disclosure is not limited thereto.

The server may be an independent physical server, or may be a server cluster or a distributed system formed by multiple physical servers, or may be a cloud server that provides basic cloud computing service such as a cloud service, a cloud database, cloud computing, a cloud function, cloud storage, a network service, cloud communication, a middleware service, a domain name service, a security service, a content distribution network (CDN), big data, and an artificial intelligence platform. The terminal may be a smartphone, a tablet computer, a notebook computer, a desktop computer, a smart sound box, a smart watch, an intelligent voice interaction device, a smart home appliance, an in-vehicle terminal, an aircraft, or the like, but is not limited thereto.

The network 150 shown in FIG. 1 represents any quantity of networks that transmit encoded video data among the first terminal apparatus 110, the second terminal apparatus 120, the third terminal apparatus 130, and the fourth terminal apparatus 140, including, for example, a wired and/or wireless communication network. The communication network 150 may exchange data in circuit-switched and/or packet-switched channels. The network may include a telecommunication network, a local area network, a wide area network, and/or the Internet. For the purposes of the present disclosure, the architecture and topology of the network 150 may be inessential for the operations disclosed in the present disclosure unless otherwise explained below.

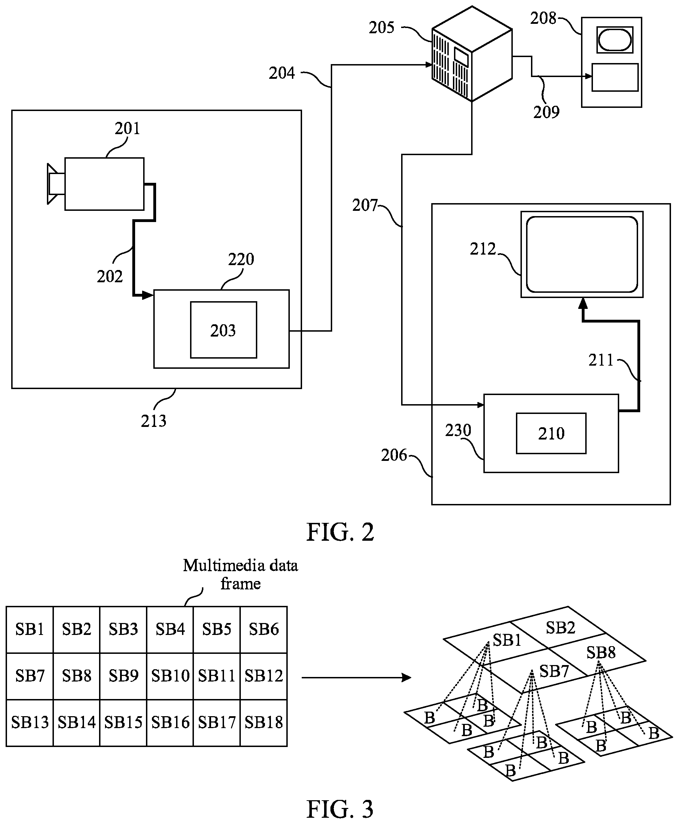

In an embodiment of the present disclosure, FIG. 2 illustrates a placement manner of a video encoding apparatus and a video decoding apparatus in a streaming environment. The subject matter disclosed in the present disclosure may be equally applicable to another video-enabled application, including, for example, a video conference, a digital television (TV), and storing a compressed video on a digital medium that includes a CD, a DVD, a memory stick, and the like.

The streaming system may include a collection subsystem 213. The collection subsystem 213 may include a video source 201 such as a digital camera. The video source creates an uncompressed video picture stream 202. In an embodiment, the video picture stream 202 includes a sample photographed by the digital camera. Compared with encoded video data 204 (or an encoded video code stream 204), the video picture stream 202 is depicted as a thick line to emphasize a high data volume video picture stream, and the video picture stream 202 may be processed by an electronic apparatus 220, where the electronic apparatus 220 includes a video encoding apparatus 203 coupled to the video source 201. The video encoding apparatus 203 may include hardware, software, or a combination of software and hardware to implement or conduct aspects of the disclosed subject matter as described in more detail below. Compared with the video picture stream 202, the encoded video data 204 (or the encoded video code stream 204) is depicted as a thin line to emphasize a lower data amount of the encoded video data 204 (or the encoded video code stream 204) that may be stored on a streaming server 205 for future use. One or more streaming client subsystems, such as a client subsystem 206 and a client subsystem 208 in FIG. 2, may access the streaming server 205 to retrieve a copy 207 and a copy 209 of the encoded video data 204. The client subsystem 206 may include, for example, a video decoding apparatus 210 in the electronic apparatus 230. The video decoding apparatus 210 decodes the incoming copy 207 of the encoded video data and generates an output video picture stream 211 that may be presented on a display 212 (e.g., a display screen) or another presentation apparatus. In some streaming systems, the encoded video data 204, the video data 207, and the video data 209 (e.g., video code streams) may be encoded according to some video encoding/compression standards.

The electronic apparatus 220 and the electronic apparatus 230 may include other components not shown in the figure. For example, the electronic apparatus 220 may include a video decoding apparatus, and the electronic apparatus 230 may further include a video encoding apparatus.

In an embodiment of the present disclosure, international video encoding standards High Efficiency Video Coding (HEVC) and Versatile Video Coding (VVC), and a Chinese national video encoding standard AVS are used as examples. After one video frame image is inputted, the video frame image is divided into several non-overlapping processing units according to a block size, and a similar compression operation is performed on each processing unit. This processing unit is referred to as an encoding tree unit (CTU), or is referred to as a largest encoding unit (LCU). The CTU may be further divided into one or more basic encoding units (CU), where the CU is a most basic element in an encoding phase.

In another embodiment, the processing unit may also be referred to as a tile, which is a rectangular area of a multimedia data frame that can be independently decoded and encoded. The tile may be further divided into one or more superblocks (SB), where the SB is a start point of block division, and may be further divided into multiple subblocks, and then the superblock is further divided into one or more blocks. Each block is a most basic element in an encoding phase. In some embodiments, a relationship between the SB and the block (B) may be shown in FIG. 3, that is, one SB may include several Bs.

The following describes some concepts in an encoding process:

Predictive encoding: Predictive encoding includes a manner such as intra-frame prediction and inter-frame prediction. After a selected reconstructed video signal is used for performing prediction on an original video signal, a residual video signal is obtained. An encoder needs to determine which predictive encoding mode to select for a current encoding unit (or encoding block), and notifies a decoder regarding the same. Intra-frame prediction means that a predicted signal is obtained from an area that has been encoded and reconstructed in the same image. Inter-frame prediction means that a predicted signal is obtained from another image that has been encoded and is different from a current image (referred to as a reference image)

Transform & Quantization: After a transform operation such as discrete Fourier transform (DFT) or discrete cosine transform (DCT) is performed, a residual video signal is converted into a transform field, which is referred to as a transform coefficient. The transform coefficient is used for performing a lossy quantization operation, to lose some information, so that a quantized signal facilitates compression expression. In some video encoding standards, there may be more than one transform manner to be selected. Therefore, the coder also needs to select one of the transform manners for the current encoding unit (or encoding block), and notify the decoder regarding the same. A degree of precision of quantization is usually determined by a quantization parameter (QP). A larger value of the QP indicates that a coefficient of a larger value range is quantized to the same output, and may thus result in a larger distortion and a lower bit rate are generally brought. Conversely, when the value of the QP is relatively small, a coefficient indicating a relatively small value range is quantized to the same output, and may thus result in relatively small distortion, and a relative high bit rate.

Entropy encoding or statistical encoding: A quantized transform field signal is subject to statistical compression encoding according to an appearance frequency of each value, and finally a binary (0 or 1) compressed code stream is outputted. In addition, other information is generated through encoding, such as a selected encoding mode and motion vector data, and entropy encoding also needs to be performed to reduce a bit rate. Statistical encoding is a lossless encoding manner, and a bit rate required for expressing the same signal can be effectively reduced. Common statistical encoding manners include variable length encoding (VLC) or content adaptive binary arithmetic encoding (CABAC).

A content adaptive binary arithmetic encoding (CABAC) process mainly includes three operations: binarization, context modeling, and binary arithmetic encoding. After binarization operation is performed on an inputted syntax element, binary data may be encoded by using a conventional encoding mode and a bypass encoding mode. The bypass encoding mode does not need to allocate a specific probability model for each binary bit, and an inputted binary bit bin value is encoded directly with a simple bypass coder to accelerate the entire encoding and decoding. Generally, different syntax elements are not completely independent of each other, and the same syntax element has a specific memory. Therefore, according to the conditional entropy theory, conditional encoding is performed by using another encoded syntax element, and encoding performance can be improved relative to independent encoding or memoryless encoding. These encoded symbol information used as a condition is referred to as a context. In a conventional encoding mode, binary bits of a syntax element are sequentially inputted into a context modeler, and the coder allocates a suitable probability model for each inputted binary bit according to a value of a previously encoded syntax element or binary bit. This process is context modeling. A context model corresponding to a syntax element may be located by using a context index increment (ctxIdxInc) and a context index Start (ctxIdxStart). After the bin value and the allocated probability model are sent together to a binary arithmetic coder for encoding, the context model needs to be updated according to the bin value, that is, an adaptive process in encoding.

Loop filtering: A changed and quantized signal is used for obtaining a reconstructed image through operations like inverse quantization, inverse transform, and prediction compensation. Compared with an original image, some information of the reconstructed image is different from that of the original image due to quantization, that is, the reconstructed image has distortion. Therefore, a filtering operation may be performed on the reconstructed image, for example, a filter such as a deblocking filter (DB), sample adaptive offset (SAO), or an adaptive loop filter (ALF), so as to effectively reduce at least a degree of distortion generated during quantization. Because these filtered reconstructed images are used as references for subsequently encoded images to predict future image signals, the foregoing filtering operation is also referred to as loop filtering, (i.e., a filtering operation in an encoding loop).

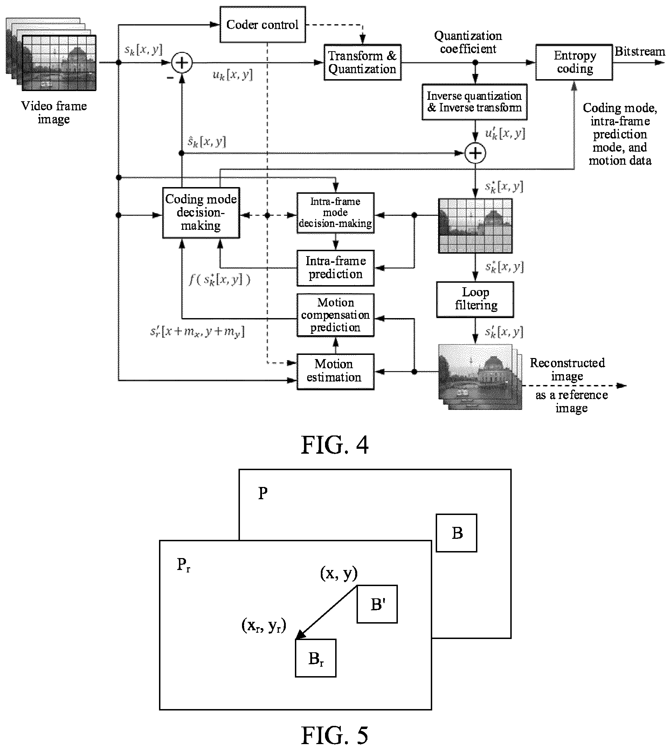

In an embodiment of the present disclosure, FIG. 4 is a basic flowchart of a video coder. In this procedure, intra-frame prediction is used as an example for description. A difference operation is performed between the original image signal $s_k[x, y]$ and the predicted image signal $\hat{s}_k[x, y]$ to obtain a residual signal $u_k[x, y]$, and after the residual signal $u_k[x, y]$ is transformed and quantized, a quantization coefficient is obtained. On the one hand, an encoded bit stream is obtained by means of entropy encoding using the quantization coefficient, and on the other hand, a reconstructed residual signal $u'_k[x, y]$ is obtained by means of inverse quantization and inverse transform processing. The predicted image signal $\hat{s}_k[x, y]$ is superposed with the reconstructed residual signal $u'_k[x, y]$ to generate an image signal $s_k^*[x, y]$ . On the one hand, the image signal $s_k^*[x, y]$ is inputted to an intra-frame mode decision module and an intra-frame prediction module to perform intra-frame prediction processing, and on the other hand, a reconstructed image signal $s'_k[x, y]$ is outputted by using loop filtering. The reconstructed image signal $s'_k[x, y]$ may be used as a reference image of a next frame to perform motion estimation and motion compensation prediction. Then, a predicted image signal $\hat{s}_k[x, y]$ of the next frame is obtained based on a result $s'_t[x + m_x, y + m_y]$ of motion compensation prediction and an intra-frame prediction result $f(s_k^*[x, y])$ , and the foregoing process continues to be repeated until encoding is completed.

Based on the foregoing encoding process, entropy decoding is performed for each encoding unit (or encoding block) at the decoder, to obtain various mode information and quantization coefficients after a compressed code stream (that is, a bit stream) is obtained. Then the quantization coefficient is subjected to inverse quantization and inverse transform processing to obtain a residual signal. In addition, a prediction signal corresponding to the encoding unit (or code block) may be obtained according to known encoding mode information, and then a reconstruction signal may be obtained by adding a residual signal and a prediction signal, and the reconstruction signal is then subjected to an operation such as loop filtering, to generate a final output signal.

Mainstream video encoding standards (such as HEVC, VVC, AVS3, AV1, and AV2) use block-based hybrid encoding frameworks. In actual application, original video data is divided into a series of encoding blocks, and video data compression is implemented with reference to video encoding methods such as prediction, transform, and entropy encoding. Motion compensation is a common prediction method used in video encoding. Motion compensation derives a prediction value of a current encoding block from an encoded area based on a redundancy characteristic of video content in a time domain or a space domain. Such prediction methods include inter-frame prediction, intra-frame block replication prediction, intra-frame string replication prediction, and the like. In encoding implementation, these prediction methods may be used independently or in combination. For an encoded block that has used these prediction methods, it is usually required to explicitly or implicitly encode one or more two-dimensional displacement vectors in a code stream, indicating a displacement of a current block (or an intra block of the current block) relative to its one or more reference blocks.

A full name of AV1 is Alliance for Open Media Video 1, and it is the first-generation video encoding standard formulated by the Alliance for Open Media. Further, a full name of AV2 is Alliance for Open Media Video 2 and it is the second-generation video encoding standard formulated by the Alliance for Open Media.

In different prediction modes and different implementations, a displacement vector may have different names. The embodiments of the present disclosure are described in the following manner: 1) A displacement vector in inter-frame prediction is referred to as a motion vector (MV); 2) a displacement vector in intra-frame block replication is referred to as a block vector (BV); 3) a displacement vector in intra-frame string replication is referred to as a string vector (SV). Descriptions associated with inter-frame prediction and intra-frame block replication prediction are provided in the following.

As shown in FIG. 5, inter-frame prediction uses a correlation in a video time domain to predict a pixel of a current image by using a pixel of an adjacent encoded image, so as to effectively remove video time domain redundancy, and effectively save a bit of encoded residual data. P represents a current frame, $Pr$ represents a reference frame, $B$ represents a current code block, and $Br$ represents a reference block of $B$. Coordinates of B' in the reference frame are the same as coordinates of B in the current frame, coordinates of $Br$ are $(x_r, y_r)$, coordinates of the B' are (x, y), and a displacement between the current code block and the reference block is referred to as a motion vector (that is, MV), where MV= $(x_r-x, y_r-y)$.

Considering that a time domain or space domain adjacent block has a relatively strong correlation, an MV prediction technology may be used for reducing bits required for encoding an MV. In H.265/HEVC, inter-frame prediction includes two types of MV prediction technologies: merge and advanced motion vector prediction (AMVP). The merge mode establishes an MV candidate list for a prediction unit (PU), where there are five candidate MVs (and corresponding reference images). An MV with a lowest rate distortion cost within the five candidate MVs are selected as an optimal MV. If an encoder establishes a candidate list in the same manner, a coder only needs to transmit an index of the optimal MV in the candidate list. The MV prediction technology of HEVC also has a skip mode, which is a special example of the merge mode. After the optimal MV is found in the merge mode, if a current block and a reference block are basically the same, residual data does not need to be transmitted, and only an index of the MV and a skip flag need to be transmitted.

Similarly, the AMVP mode establishes a candidate prediction MV list for a current PU by using an MV correlation between a space domain adjacent block and a time domain adjacent block. Unlike the merge mode, an optimal prediction MV is selected from the candidate prediction MV list in the AMVP mode, and differential encoding is performed between the candidate prediction MV list in the AMVP mode and the optimal MV obtained by performing a motion search on a current code block, that is, encoding MVD=MV-MVP. By establishing the same list, the decoder may calculate the MV of the current code block only by using a sequence number of a motion vector difference (MVD) and a motion vector predictor (MVP) in the list. An AMVP candidate MV list also includes two cases in a space domain and a time domain, but is different in that a length of the AMVP list is only 2.

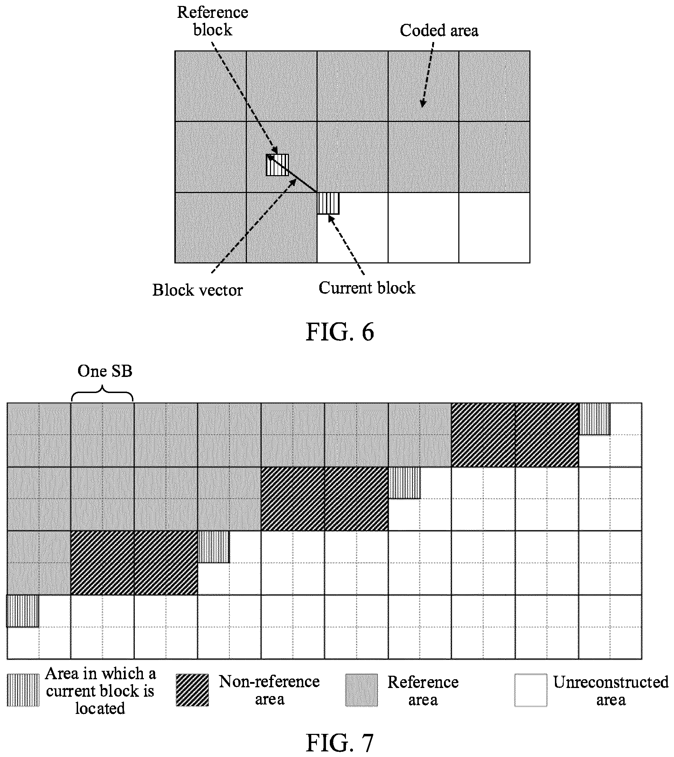

Intra-frame block replication is an encoding technique adopted in screen content encoding (SCC) extension of HEVC, which significantly improves encoding efficiency of screen content. In AVS3 and VVC, an intra block copy (IBC) technology is also adopted to improve performance of screen content encoding. The IBC can effectively save bits required for encoding pixels by using a spatial correlation of screen content videos and using pixels of a currently encoded image to predict pixels of a current to-be-encoded block. As shown in FIG. 6, a displacement between a current block and a reference block in an IBC is referred to as a block vector (BV).

In the current AV1 standard, the IBC mode uses a solution of a global reference range (i.e., a reconstructed area of a current frame is allowed to be used as a reference block of a current block). However, since the IBC uses an off-chip memory to store a reference sample, the following limitations need to be added to resolve a potential hardware implementation problem of the IBC:

1) If the current image is allowed to use the IBC mode, a loop filter will be disabled, to avoid additional image storage requirements. To reduce impact of the loop filter when being off, the IBC mode is only allowed to be used in key frames.

2) A location of the reference block needs to meet a hardware write-back delay limitation. For example, an area of 256 reconstructed samples in a horizontal direction of the current block may not be allowed to be used as a reference block.

3) A location of the reference block needs to meet a limitation of parallel processing.

FIG. 7 illustrates a schematic diagram of an example IBC reference range in a current AV1 standard. The size of an SB is 128×128, a coder performs parallel encoding according to an SB row, and an area (i.e., a size of two SBs) of 256 reconstructed samples in a horizontal direction of a current block is not allowed to be used as a reference block.

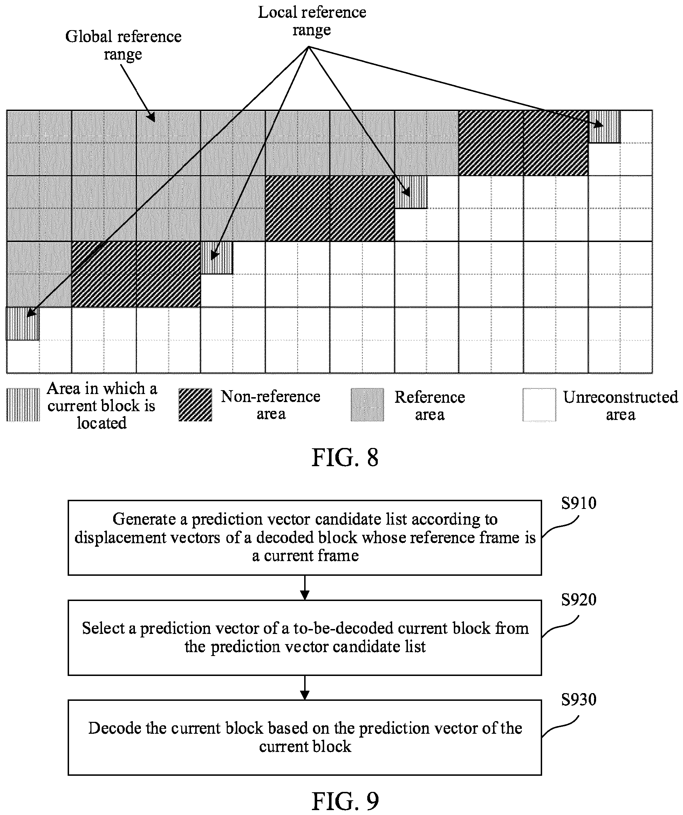

In the Alliance for Open Media (AOM) next-generation standard AV2 in the related art, the IBC mode is improved. FIG. 8 illustrates a schematic diagram of an example IBC reference range in a AV2 standard. As shown in FIG. 8, in AV2, a reference range of an IBC includes two parts, which are respectively referred to as a global reference range and a local reference range. The global reference range is a reference range allowed in AV1. The local reference range is a newly added reference range, and a size of the local reference range may be, for example, 64×64 (that is, an SB area in which a current block is located). A pixel sample of the reference range is stored in an additional on-chip memory. Therefore, a loop filter does not need to be disabled when only the reference range is used. In addition, the IBC allows different reference ranges depending on a frame type. For example, for a key frame, the IBC allows usage of a global reference range and a local reference range, and for a non-key frame, the IBC allows only usage of a local reference range.

The local reference range may have different sizes in different implementations. For example, in addition to 64×64, 128×128 may also be used.

Since AV2 allows different types of reference ranges to be used, values of a block vector vary significantly when a reference block is within different types of reference ranges. For example, when the reference block is within a local reference range, an absolute value of the block vector will be less than 64. When the reference block is in the global reference range, the absolute values of the block vector are all greater than 64. However, in the current AVS, default prediction block vectors are all directed to the global reference range, without considering a case in which the current block is located in the local reference range. For a reference block in a local reference range, a default prediction block vector cannot provide better prediction, which causes a larger block vector encoding overhead. In addition, in a related audio and video encoding and decoding technology, if a code stream does not include a prediction vector of a current block, default prediction vectors need to be derived. However, in the related art, a limitation exists in selecting these default prediction vectors, which affects overall encoding performance.

FIG. 9 is a flowchart of a video decoding method according to an embodiment of the present disclosure. The video decoding method may be performed by a device having a computing and processing function. For example, the video decoding method may be performed by a terminal device or a server. Referring to FIG. 9, the video decoding method includes at least the following operations.

Operation S910: Generate a prediction vector candidate list according to displacement vectors of a decoded block whose reference frame is a current frame.

Operation S920: Select a prediction vector of a to-be-decoded current block from the prediction vector candidate list.

Operation S930: Decode the current block based on the prediction vector of the current block.

The technical solution of the embodiment shown in FIG. 9 allows a more suitable prediction vector candidate list to be constructed according to displacement vectors of a decoded block whose reference frame is a current frame, and allows a more accurate prediction vector to be selected therefrom, thereby improving encoding performance.

The technical solution in the embodiment shown in FIG. 9 may be used for deriving a "default" prediction vector. Namely, only when all components of a prediction block vector of a current block (derived through a fixed rule in a standard) are 0, the prediction vector is derived by using the method shown in FIG. 9. Certainly, in another embodiment of the present disclosure, the technical solution in the embodiment shown in FIG. 9 may also be directly used.

Descriptions of example implementation of operations S910 to S930 are provided in the following.

In operationS910, the prediction vector candidate list is generated according to the displacement vectors of the decoded block whose reference frame is the current frame.

In some embodiments, a displacement vector may have different names in different prediction modes and different implementations. For example, a displacement vector in inter-frame prediction may be referred to as a motion vector (MV), a displacement vector in intra-frame block replication is referred to as a block vector (BV), and a displacement vector in intra-frame string replication is referred to as a string vector (SV).

In an embodiment of the present disclosure, a prediction vector candidate list may be constructed according to displacement vectors of a decoded block adjacent to a current block.

In actual application, the displacement vectors of the decoded block adjacent to the current block may be obtained from the displacement vectors of the decoded block whose reference frame is the current frame, and then the displacement vectors of the decoded block adjacent to the current block are sorted according to a specified sequence, so as to generate a first displacement vector list. Accordingly, a prediction vector candidate list may be generated according to the first displacement vector list. For example, the first displacement vector list may be used as a prediction vector candidate list.

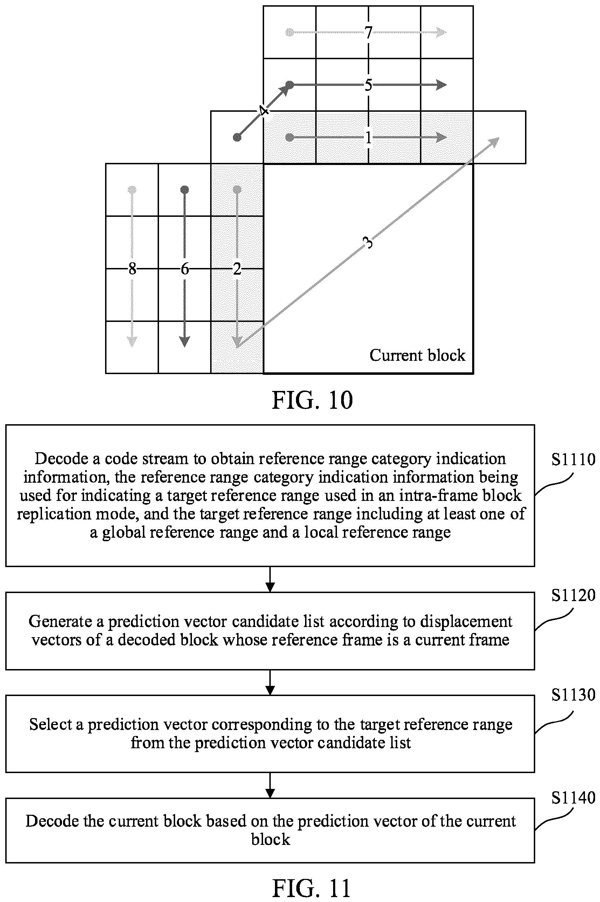

In some embodiments, the decoded block adjacent to the current block may include at least one of the following: one or more decoded blocks in $n_1$ rows above the current block, or one or more decoded blocks in $n_2$ columns on the left of the current block; and $n_1$ and $n_2$ are positive integers. For example, as shown in FIG. 10, adjacent decoded blocks may be three rows of decoded blocks above the current block or three columns of decoded blocks on the left of the current block, and a basic unit of each row or column may be a size of 8×8. Displacement vector information is usually stored in a unit of 4×4. In an implementation, multiple displacement vectors may be obtained through searching using an 8×8 unit, and quantities of displacement vectors obtained by searching may be different for different rows or columns.

In some embodiments, the specified sequence may include a decoding sequence of decoded blocks, a scanning sequence of decoded blocks, or a weight corresponding to a displacement vector. The weight corresponding to the displacement vector may be associated with at least one of the following factors: a repetition quantity of a displacement vector, a block size corresponding to a displacement vector, and a block location corresponding to a displacement vector.

For example, if a repetition quantity of the displacement vector is larger, the weight corresponding to the displacement vector is larger, and a sequence in the first displacement vector list is more top ranked. If a block corresponding to the displacement vector is smaller, the weight corresponding to the displacement vector is larger, and the sequence in the first displacement vector list is more top ranked. If the location of the block corresponding to the displacement vector is closer to the current block, the weight corresponding to the displacement vector is larger, and the sequence in the first displacement vector list is more top ranked.

In an embodiment of the present disclosure, a prediction vector candidate list may be constructed according to displacement vectors of a historical decoded block.

In actual application, the displacement vectors of the historical decoded block may be obtained from the displacement vectors of the decoded block whose reference frame is the current frame. Subsequently, based on a specified sequence, the displacement vectors of the historical decoded block are added to a queue of a specified length in a first-in first-out manner, so as to generate a second displacement vector list. Further, a prediction vector candidate list is generated according to the second displacement vector list. For example, the second displacement vector list may be used as the prediction vector candidate list.

In some embodiments, for example, if a queue length is 3, a displacement vector 1, a displacement vector 2, and a displacement vector 3 may be stored according to the specified sequence. When a new displacement vector 4 needs to be added, the displacement vectors in the queue become the displacement vector 2, the displacement vector 3, and the displacement vector 4. If a new displacement vector 5 needs to be added, the displacement vectors in the queue become the displacement vector 3, the displacement vector 4, and the displacement vector 5.

In some embodiments, the specified sequence may be a decoding sequence of decoded blocks, a scanning sequence of decoded blocks, or a weight corresponding to a displacement vector. The weight corresponding to the displacement vector may be associated with at least one of the following factors: a repetition quantity of a displacement vector, a block size corresponding to a displacement vector, and a block location corresponding to a displacement vector.

For example, if a repetition quantity of the displacement vector is larger, the weight corresponding to the displacement vector is larger, and a sequence in the first displacement vector list is more top ranked. If a block corresponding to the displacement vector is smaller, the weight corresponding to the displacement vector is larger, and the sequence in the first displacement vector list is more top ranked. If the location of the block corresponding to the displacement vector is closer to the current block, the weight corresponding to the displacement vector is larger, and the sequence in the first displacement vector list is more top ranked.

In some embodiments, when the displacement vectors of the historical decoded block are added to the queue, and a same displacement vector already exists in the queue, the same displacement vector already existing in the queue is deleted. For example, a displacement vector 1, a displacement vector 2, and a displacement vector 3 are stored in a queue. When a new displacement vector 4 needs to be added, if the displacement vector 4 is the same as the displacement vector 2, the displacement vector 2 may be deleted from the queue, and the obtained queue is changed into: the displacement vector 1, the displacement vector 3, and the displacement vector 4.

In some embodiments, a second displacement vector list may be corresponding to at least one to-be-decoded area, and the to-be-decoded area includes one of the following: a superblock (SB) in which the current block is located, a row of the superblock (SB) in which the current block is located, and a tile in which the current block is located. For example, one second displacement vector list is corresponding to one SB, or one second displacement vector list is corresponding to multiple SBs. On this basis, in some embodiments, if the displacement vector in the second displacement vector list corresponding to the target to-be-decoded region (that is, a specified to-be-decoded region) exceeds a specified value, adding the displacement vector to the second displacement vector list corresponding to the target to-be-decoded region is stopped. Namely, a maximum quantity may be specified for the second displacement vector list corresponding to the to-be-decoded region. After the maximum quantity is exceeded, adding the displacement vector to the corresponding second displacement vector list may be stopped.

Certainly, for a to-be-decoded code area, an operation quantity of adding a displacement vector to the second displacement vector list corresponding to the to-be-decoded code area may also be recorded. When the operation quantity exceeds a preset value, adding a new displacement vector to the corresponding second displacement vector list is stopped. That is, by recording an operation quantity of adding a displacement vector to the second displacement vector list, example embodiments of the present disclosure may determine whether to stop adding a displacement vector to the corresponding second displacement vector list.

In an embodiment of the present disclosure, a prediction vector candidate list may be constructed according to the displacement vectors of the decoded block adjacent to the current block and the displacement vectors of the historical decoded block.

In actual application, the displacement vectors of the decoded block adjacent to the current block may be obtained from the displacement vectors of the decoded block whose reference frame is the current frame, the displacement vectors of the historical decoded block are obtained from the displacement vectors of the decoded block whose reference frame is the current frame. Subsequently, a prediction vector candidate list is generated according to the obtained displacement vectors of the adjacent decoded block and the obtained displacement vectors of the historical decoded block. When the prediction vector candidate list is generated according to the obtained displacement vectors of the adjacent decoded block and the obtained displacement vectors of the historical decoded block, the obtained displacement vectors may be arranged in a specified sequence, so as to generate the prediction vector candidate list. In this process, a repeated or redundant displacement vector can be deleted.

In some embodiments, when the prediction vector candidate list is generated according to the obtained displacement vectors of the adjacent decoded block and the obtained displacement vectors of the historical decoded block, a displacement vector not in a preset area may be further deleted, and the preset area includes at least one of the following: a current image, a current tile, a current global reference range, and a current local reference range.

In some embodiments, when the obtained displacement vectors are arranged according to a specified sequence, the specified sequence may be a decoding sequence of decoded blocks, a scanning sequence of decoded blocks, a type of a decoded block, or a weight corresponding to a displacement vector. The weight corresponding to the displacement vector may be associated with at least one of the following factors: a repetition quantity of a displacement vector, a block size corresponding to a displacement vector, and a block location corresponding to a displacement vector. A decoded block may be a decoded block adjacent to the current block (that is, a code block in the foregoing first displacement vector list), or may be a historical decoded block (that is, a code block in the foregoing second displacement vector list). Therefore, the type of the decoded block is used for indicating whether the decoded block is a decoded block adjacent to the current block (i.e., a code block in the first displacement vector list) or a historical decoded block (i.e., a code block in the second displacement vector list). For example, the displacement vectors of the decoded block adjacent to the current block may be arranged before the displacement vectors of the historical decoded block, or certainly, the displacement vectors of the decoded block adjacent to the current block may be arranged after the displacement vectors of the historical decoded block.

In an embodiment, the displacement vectors of the decoded block adjacent to the current block may further be obtained from the displacement vectors of the decoded block whose reference frame is the current frame, and the displacement vectors of the decoded block adjacent to the current block are sorted in a specified sequence to generate a first displacement vector list. Then, the displacement vectors of the historical decoded block are obtained from the displacement vectors of the decoded block whose reference frame is the current frame, and the displacement vectors of the historical decoded block are added to a queue of a specified length in a first-in first-out manner according to a specified sequence, so as to generate a second displacement vector list; and further, the prediction vector candidate list is generated according to the first displacement vector list and the second displacement vector list.

Descriptions of the process of generating the first displacement vector list and the second displacement vector list have been provided above with reference to the foregoing embodiment. Thus, redundant descriptions associated therewith may be omitted below for conciseness.

In some embodiments, the process of generating the prediction vector candidate list according to the first displacement vector list and the second displacement vector list may include merging the first displacement vector list and the second displacement vector list, and deleting a duplicate displacement vector to generate a prediction vector candidate list.

In some embodiments, the displacement vectors in the first displacement vector list may be arranged before the displacement vectors in the second displacement vector list when the first displacement vector list and the second displacement vector list are merged. Certainly, the displacement vectors in the first displacement vector list may also be arranged after the displacement vectors in the second displacement vector list.

In some embodiments, when the first displacement vector list and the second displacement vector list are merged, whether a displacement vector not in a preset area exists in the first displacement vector list and the second displacement vector list may be further detected. The preset area includes at least one of the following: a current image, a current tile, a current global reference range, and a current local reference range. Then, in a process of merging the first displacement vector list and the second displacement vector list, a displacement vector not in the preset area is deleted.

As shown in FIG. 9, in operation S920, the prediction vector of the to-be-decoded current block is selected from the prediction vector candidate list.

In an embodiment of the present disclosure, a process of selecting the prediction vector of the current block from the prediction vector candidate list may be decoding a code stream to obtain prediction vector index information, and then selecting a prediction vector from a corresponding location in the prediction vector candidate list according to the prediction vector index information as the prediction vector of the current block.

In some embodiments, whether the prediction vector index information needs to be decoded may be determined according to a length of the prediction vector candidate list. If it is determined that the prediction vector index information needs to be decoded, the code stream is decoded to obtain the prediction vector index information. In actual application, for example, if the length of the prediction vector candidate list is 1, the code stream does not need to be decoded to obtain the prediction vector index information, and a prediction vector in the prediction vector candidate list may be directly used as the prediction vector of the current block.

In some embodiments, the prediction vector index information may be encoded using a context-based multi-symbol arithmetic.

In some embodiments, the code stream may further include a maximum value of the prediction vector index information. The maximum value may be located in a sequence header, an image header, or a tile header, and the maximum value may represent a maximum quantity of prediction vector index information. In some embodiments, maximum values corresponding to different displacement vector prediction modes are the same or different.

In an embodiment of the present disclosure, a process of selecting the prediction vector of the current block from the prediction vector candidate list may also be selecting a prediction vector from the prediction vector candidate list as the prediction vector of the current block according to a preset selection policy. For example, an ith (i is a positive integer) prediction vector may be selected as the prediction vector of the current block according to a sequence, or one prediction vector is randomly selected.

In operation S930, the current block is decoded based on the prediction vector of the current block.

In an embodiment of the present disclosure, a process of decoding the current block based on the prediction vector of the current block in operation S930 may be decoding the current block by using the prediction vector of the current block as the displacement vector of the current block.

In an embodiment of the present disclosure, a process of decoding the current block based on the prediction vector of the current block in operation S930 may be decoding the code stream to obtain a vector residual of the current block, calculating the displacement vector of the current block according to the vector residual and the prediction vector of the current block, and then decoding the current block according to the displacement vector of the current block.

FIG. 11 is a flowchart of a video decoding method according to an embodiment of the present disclosure. The video decoding method may be performed by a device having a computing and processing function, for example, may be performed by a terminal device or a server. Referring to FIG. 11, the video decoding method includes at least the following steps:

Operation S1110: Decode a code stream to obtain reference range category indication information, the reference range category indication information being used for indicating a target reference range used in an intra-frame block replication mode, and the target reference range including at least one of a global reference range and a local reference range.

In some embodiments, the reference range category indication information may be implemented by using two flag bits, for example, the reference range category indication information may include a first flag bit and a second flag bit, the first flag bit is used for indicating whether the intra-frame block replication mode is allowed to use a global reference range, and the second flag bit is used for indicating whether the intra-frame block replication mode is allowed to use a local reference range.

In some embodiments, for example, if a value of the first flag bit is 1, it indicates that the intra-frame block replication mode allows a global reference range to be used. If the value of the first flag bit is 0, it indicates that the intra-frame block replication mode does not allow a global reference range to be used. If a value of the second flag bit is 1, it indicates that the intra-frame block replication mode allows a local reference range to be used. If the value of the second flag bit is 0, it indicates that the intra-frame block replication mode does not allow the local reference range to be used.

In some embodiments, the reference range category indication information may be implemented by using one flag bit. For example, in an embodiment, the reference range category indication information may include a third flag bit, and when the third flag bit is a first value (for example, 1), it indicates that a global reference range is allowed to be used in the intra-frame block replication mode. When the third flag bit is a second value (for example, 0), it indicates that a local reference range is allowed to be used in the intra-frame block replication mode.

In another embodiment, the reference range category indication information may include a fourth flag bit, and when the fourth flag bit is a first value (for example, 1), it indicates that a global reference range and a local reference range are allowed to be used in the intra-frame block replication mode. When the fourth flag bit is a second value (for example, 0), it indicates that the intra-frame block replication mode allows a local reference range to be used.

Operation S1120: Generate a prediction vector candidate list according to displacement vectors of a decoded block whose reference frame is a current frame.

An execution sequence of operation S1110 and operation S1120 is not limited in this embodiment of the present disclosure.

In an embodiment of the present disclosure, a process of generating the prediction vector candidate list according to the displacement vectors of the decoded block whose reference frame is the current frame in step S1120 may be: obtaining, from the displacement vectors of the decoded block whose reference frame is the current frame, a target decoded block whose corresponding reference block is in the target reference range and uses an intra-frame block replication mode; and generating the prediction vector candidate list according to a displacement vector of the target decoded block.

In an embodiment of the present disclosure, a process of generating the prediction vector candidate list according to the displacement vectors of the decoded block whose reference frame is the current frame in step S 1120 may be: calculating reference blocks of the current block according to the displacement vectors of the decoded block whose reference frame is the current frame, determining a target reference block that is in a target reference range and that is in the reference blocks of the current block, and further generating the prediction vector candidate list according to displacement vectors of a decoded block corresponding to the target reference block.

In some embodiments, location information of the reference block of the current block may be determined according to coordinates of the current block and the displacement vectors of the decoded block. For example, a horizontal coordinate of a corresponding reference block is calculated according to the horizontal coordinate of the current block and a horizontal component of a displacement vector. A vertical coordinate of a corresponding reference block is calculated according to the vertical coordinate of the current block and a vertical component of a displacement vector.

In some embodiments, the reference range category indication information may be image-level reference range category indication information or tile-level reference range category indication information. If a quantity of displacement vectors included in the prediction vector candidate list does not reach a specified quantity, a preset block vector may be filled in the prediction vector candidate list according to the image-level reference range category indication information or the tile-level reference range category indication information.

For example, if a global reference range is indicated, at least one of the following block vectors may be selected to fill the prediction vector candidate list: (-sb_w-D, 0), (0, -sb_h), (sb_x-b_w-cur_x- D, 0), (0, sb_y-b h-cur y), and (-M×sb_w -D, -N×sb_h). In some embodiments, the precision of these block vectors may be at the whole pixel level, and different precision representations may be used in an implementation.

In this regard, sb_w represents a width of a maximum code block in which the current block is located; sb_h represents a height of the maximum code block in which the current block is located; sb_x represents a horizontal coordinate of an upper left corner of the maximum code block in which the current block is located; sb_y represents a vertical coordinate of the upper left corner of the maximum code block in which the current block is located; b_w represents a width of the current block; b_h indicates a height of the current block; cur_x represents a horizontal coordinate of the upper left corner of the current block; cur_y represents a vertical coordinate of the upper left corner of the current block; and D, M, and N are specified constants.

If a local reference range is indicated, at least one of the following block vectors may be selected to fill the prediction vector candidate list: (-b_w, 0), (0, -b_h), (-b_w, -b_h), (-2×b_w, 0), (0, -2×b_h), (0, 0), (0, - vb_w), (-vb_h, 0), and (-vb_w, -vb_h). b_w represents a width of the current block; b_h represents a height of the current block; vb_w represents a preset block width, for example, may be 64, 32, 16, 8, or 4; and vb_h represents a preset block height, for example, may be 64, 32, 16, 8, or 4. In some embodiments, the precision of these block vectors may be at the whole pixel level, and different precision representations may be used in an implementation.

If global and local reference ranges are indicated, at least one of the above block vectors may be selected for filling.

In an embodiment of the present disclosure, when a prediction block vector is filled in the prediction vector candidate list, a candidate prediction block vector that meets any one of the following conditions may also be selected for filling:

$$cur\_x + bvpi\_x \geq min\_x;$$

$$cur\_y + bvpi\_y \geq min\_y;$$

$$cur\_x + bvpi\_x \geq min\_x \text{ and } cur\_y + bvpi\_y \geq min\_y;$$

$$cur\_x + b\_w - 1 + bvpi\_x \leq max\_x;$$

$$cur\_y + b\_h - 1 + bvpi\_y \leq max\_y;$$

$$cur\_x + b\_w - 1 + bvpi\_x \leq max\_x \text{ and } cur\_y + b\_h - 1 + bvpi\_y \leq max\_y.$$

In this regard, cur_x represents the horizontal coordinate of the upper left corner of the current block; cur_y represents the vertical coordinate of the upper left corner of the current block; b_w represents the width of the current block; b_h represents the height of the current block; bvpi_x represents a horizontal component of an ith candidate prediction block vector; and bvpi_y represents a vertical component of the ith candidate prediction block vector. If the target reference range is a global reference range, min_x and min_y indicate coordinates of an upper left corner of a tile in which the current block is located, max_x and max_y indicate coordinates of a lower right corner of a global reference range in a row in which a specified maximum code block is located, and the specified maximum code block is a maximum code block in which the current block is located. If the target reference range is a local reference range, min_x and min_y represent coordinates of an upper left corner of a local reference range in which the current block is located, and max_x and max_y represent coordinates of a lower right corner of the local reference range in which the current block is located.

In an embodiment, if the prediction vector candidate list includes less than four displacement vectors, the following operations may be performed:

A) If a global reference range and a local reference range are allowed to be used, {(0, -sb_h), (-sb_w - D, 0), (0, -h'), and (-w', 0)} may be added to the prediction vector candidate list, where a size of SB is 128, and D is 256;

B) If only a local reference range is allowed to be used, {(0, -h'), (-w', 0), (-w', -h'), (0, -2×h')} may be added to the prediction vector candidate list;

C) If only a global reference range is allowed, {(0, -sb_h), (-sb_w-D, 0), (-sb_w, -sb_h), (-2×sb_w, -sb_h)} may be added to the prediction vector candidate list, where a size of SB is 128, and D is 256;

D) When the prediction vector candidate list is filled, a duplicate checking operation may be performed, and a duplicate prediction vector is deleted.

In this regard, w'=min(b_w, 64); h'=min(b_h, 64).

Operation S1130: Select a prediction vector corresponding to the target reference range from the prediction vector candidate list.

In an embodiment of the present disclosure, if the prediction vector included in the prediction vector candidate list is corresponding to the target reference range, a process of selecting the prediction vector corresponding to the target reference range from the prediction vector candidate list may be decoding the code stream to obtain the prediction vector index information, and then selecting a prediction vector from a corresponding location in the prediction vector candidate list according to the prediction vector index information as the prediction vector of the current block.

In an embodiment of the present disclosure, a process of selecting the prediction vector corresponding to the target reference range from the prediction vector candidate list may also be selecting a prediction vector corresponding to the target reference range from the prediction vector candidate list as the prediction vector of the current block according to a preset selection policy. For example, an ith (i is a positive integer) prediction vector corresponding to the target reference range may be selected as the prediction vector of the current block according to a sequence, or a prediction vector may be randomly selected.

Operation S 1140: Decode the current block based on the prediction vector of the current block.

In an embodiment of the present disclosure, a process of decoding the current block based on the prediction vector of the current block may be decoding the current block by using the prediction vector of the current block as the displacement vector of the current block; or decoding the code stream to obtain a vector residual of the current block, calculating the displacement vector of the current block according to the vector residual and the prediction vector of the current block, and then decoding the current block according to the displacement vector of the current block.

Based on the technical solution in the embodiment shown in FIG. 9 or FIG. 11, in an embodiment of the present disclosure, the displacement vector prediction mode indication information may be further obtained by decoding the code stream. On this basis, when the displacement vector prediction mode indication information indicates that the current block uses a skip prediction mode, a prediction vector of the current block is used as a displacement vector of the current block, and a decoding process of a residual coefficient of the current block is skipped, to decode the current block; when the displacement vector prediction mode indication information indicates that the current block uses a NearMV prediction mode, a prediction vector of the current block is used as a displacement vector of the current block, and a residual coefficient of the current block is decoded, to decode the current block; or when the displacement vector prediction mode indication information indicates that the current block uses a NewMV prediction mode, the code stream is decoded to obtain a displacement vector residual of the current block, a displacement vector of the current block is calculated according to the displacement vector residual and the prediction vector of the current block, and a residual coefficient of the current block is decoded, to decode the current block.

The foregoing three prediction modes may be randomly combined during implementation, for example, one, two, or all of the three modes are used.

In an embodiment of the present disclosure, whether the displacement vector prediction mode indication information needs to be decoded may be further determined according to a length of the prediction vector candidate list. If it is determined that the displacement vector prediction mode indication information needs to be decoded, the displacement vector prediction mode indication information is obtained by decoding the code stream. For example, if the length of the prediction vector candidate list is 0, it indicates that the prediction vector of the current block is 0. In this case, the NewMV prediction mode may be used by default, and the displacement vector residual of the current block is decoded as the prediction vector of the current block.

In an embodiment of the present disclosure, a process of decoding the code stream to obtain the displacement vector residual of the current block may include decoding the code stream to obtain a symbol and a value of the displacement vector of the current block; or may include decoding the code stream to obtain joint type indication information (joint_type). The joint type indication information is used for indicating component consistency between the displacement vector residual of the current block and the prediction vector of the current block. That is, the joint type indication information can indicate whether or not components between the displacement vector residual of the current block and the prediction vector of the current block are consistent. The displacement vector residual of the current block is obtained by decoding according to the joint type indication information.

For example, if the joint type indication information indicates that horizontal components between the displacement vector residual and the prediction vector are consistent, and vertical components therebetween are inconsistent, only the vertical components need to be decoded from the code stream. In this case, the encoder also does not need to encode the horizontal component of the displacement vector residual in the code stream. If the joint type indication information indicates that the horizontal components between the displacement vector residual and the prediction vector are inconsistent, and the vertical components therebetween are consistent, only the horizontal components need to be decoded from the code stream. In this case, the encoder does not need to encode the vertical component of the displacement vector residual in the code stream. If the joint type indication information indicates that the horizontal components and the vertical components between the displacement vector residual and the prediction vector are consistent, the displacement vector residual does not need to be decoded from the code stream. In this case, the coder does not need to code the displacement vector residual in the code stream. If the joint type indication information indicates that the horizontal components and the vertical components between the displacement vector residual and the prediction vector are inconsistent, the horizontal component and the vertical component of the displacement vector residual need to be decoded from the code stream.

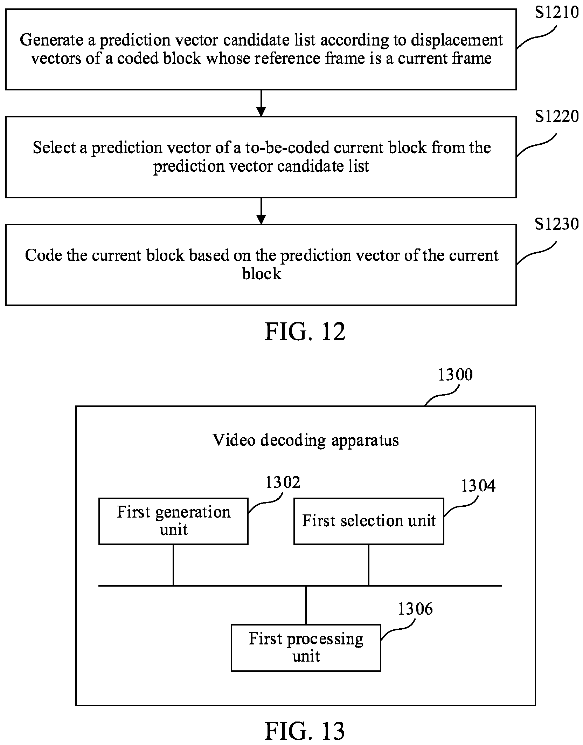

FIG. 12 is a flowchart of a video encoding method according to an embodiment of the present disclosure. The video encoding method may be performed by a device having a computing and processing function, for example, may be performed by a terminal device or a server. With reference to FIG. 12, the video encoding method includes at least operation S1210 to operation S 1230. Descriptions of the operations S1210 to S 1230 are provided in the following.

Operation S1210: Generate a prediction vector candidate list according to displacement vectors of an encoded block whose reference frame is a current frame.

Operation S1220: Select a prediction vector of a to-be-coded current block from the prediction vector candidate list.

Operation S1230: Encode the current block based on the prediction vector of the current block.

In some embodiments, the selecting a prediction vector of a to-be-encoded current block from the prediction vector candidate list includes: decoding a code stream to obtain prediction vector index information; and selecting, according to the prediction vector index information, a prediction vector from a corresponding location in the prediction vector candidate list as the prediction vector of the to-be-coded current block.

In some embodiments, the decoding a code stream to obtain prediction vector index information includes: decoding, when it is determined, according to the length of the prediction vector candidate list, that the prediction vector index information needs to be decoded, the code stream to obtain the prediction vector index information.

In some embodiments, the prediction vector index information is encoded using a context-based multi-symbol arithmetic.

In some embodiments, the code stream includes a maximum value of the prediction vector index information, and the maximum value is located in a sequence header, an image header, or a tile header. In this regard, maximum values corresponding to different displacement vector prediction modes are the same or different.

In some embodiments, the selecting a prediction vector of a to-be-encoded current block from the prediction vector candidate list includes:

selecting a prediction vector from the prediction vector candidate list as the prediction vector of the to-be-coded current block according to a specified selection policy.

In some embodiments, the generating a prediction vector candidate list according to displacement vectors of an encoded block whose reference frame is a current frame includes: obtaining displacement vectors of an encoded block adjacent to the current block from the displacement vectors of the encoded block whose reference frame is the current frame; sorting the displacement vectors of the encoded block adjacent to the current block in a specified sequence to obtain a first displacement vector list; and generating the prediction vector candidate list according to the first displacement vector list.

In some embodiments, the adjacent encoded blocks include at least one of the following: encoded blocks in n1 rows above the current block, or encoded blocks in n2 columns on the left of the current block; and n1 and n2 are positive integers.

In some embodiments, the generating a prediction vector candidate list according to displacement vectors of an encoded block whose reference frame is a current frame includes: obtaining displacement vectors of a historical encoded block from the displacement vectors of the encoded block whose reference frame is the current frame; adding the displacement vectors of the historical encoded block to a queue of a specified length in a first-in first-out manner according to a specified sequence, to obtain a second displacement vector list; and generating the prediction vector candidate list according to the second displacement vector list.

In some embodiments, the video encoding method further includes:
deleting, when the displacement vectors of the historical encoded block are added to the queue, and a same displacement vector already exists in the queue, the same displacement vector already existing in the queue.

In some embodiments, a second displacement vector list may correspond to at least one to-be-encoded area, and the to-be-encoded area includes one of the following: a maximum code block in which the current block is located, a row in the maximum code block in which the current block is located, and a tile in which the current block is located.

In some embodiments, the video encoding method further includes: when a displacement vector in a second displacement vector list corresponding to a target to-be-encoded area exceeds a specified value, stopping adding a displacement vector to the second displacement vector list corresponding to the target to-be-encoded area; or when a quantity of times of adding a displacement vector to a second displacement vector list corresponding to a target to-be-coded area exceeds a specified quantity of times, stopping adding a displacement vector to the second displacement vector list corresponding to the target to-be-encoded area.

In some embodiments, the generating a prediction vector candidate list according to displacement vectors of an encoded block whose reference frame is a current frame includes: obtaining displacement vectors of an encoded block adjacent to the current block from the displacement vectors of the encoded block whose reference frame is the current frame, and sorting the displacement vectors of the encoded block adjacent to the current block in a specified sequence to obtain a first displacement vector list; obtaining displacement vectors of a historical encoded block from the displacement vectors of the encoded block whose reference frame is the current frame, and adding the displacement vectors of the historical encoded block to a queue of a specified length in a first-in first-out manner according to a specified sequence, to obtain a second displacement vector list; and generating the prediction vector candidate list according to the first displacement vector list and the second displacement vector list.

In some embodiments, the generating the prediction vector candidate list according to the first displacement vector list and the second displacement vector list includes: merging the first displacement vector list and the second displacement vector list to obtain a merged displacement vector list; and removing a duplicate displacement vector from the merged displacement vector list to obtain the prediction vector candidate list.

In some embodiments, the video encoding method further includes: detecting displacement vectors in the first displacement vector list and the second displacement vector list; and deleting a displacement vector not in a preset area in a process of merging the first displacement vector list and the second displacement vector list; where the preset area includes at least one of the following: a current image, a current tile, a current global reference range, and a current local reference range.

In some embodiments, the specified sequence includes one of the following: an encoding sequence of encoded blocks, a scanning sequence of encoded blocks, a type of an encoded block, and a weight of a displacement vector. In this regard, the weight is associated with at least one of the following factors: a repetition quantity of a displacement vector, a block size corresponding to a displacement vector, and a block location corresponding to a displacement vector.

In some embodiments, the video encoding method further includes: decoding a code stream to obtain reference range category indication information, the reference range category indication information being used for indicating a target reference range used in an intra-frame block replication mode, and the target reference range including at least one of a global reference range and a local reference range.

The selecting a prediction vector of a to-be-coded current block from the prediction vector candidate list includes: selecting, from the prediction vector candidate list, a prediction vector corresponding to the target reference range as the prediction vector of the to-be-coded current block.

In some embodiments, the generating a prediction vector candidate list according to displacement vectors of an encoded block whose reference frame is a current frame includes: obtaining, from the displacement vectors of the encoded block whose reference frame is the current frame, a target encoded block whose corresponding reference block is in the target reference range and uses an intra-frame block replication mode; and generating the prediction vector candidate list according to a displacement vector of the target encoded block.

In some embodiments, the generating a prediction vector candidate list according to displacement vectors of an encoded block whose reference frame is a current frame includes: determining a reference block of the current block according to the displacement vectors of the encoded block whose reference frame is the current frame; determining a target reference block in the target reference range from the reference block of the current block; and generating the prediction vector candidate list according to a displacement vector of an encoded block corresponding to the target reference block.

In some embodiments, the reference range category indication information is image-level reference range category indication information or tile-level reference range category indication information; and the video encoding method further includes: when a quantity of displacement vectors in the prediction vector candidate list does not reach a specified quantity, filling a preset block vector into the prediction vector candidate list according to the image-level reference range category indication information or the tile-level reference range category indication information.

In some embodiments, the video encoding method further includes: decoding the code stream to obtain displacement vector prediction mode indication information.

The encoding the current block based on the prediction vector of the current block includes: using, when the displacement vector prediction mode indication information indicates that the current block uses a skip prediction mode, a prediction vector of the current block as a displacement vector of the current block, and skipping an encoding process of a residual coefficient of the current block; using, when the displacement vector prediction mode indication information indicates that the current block uses a near motion vector prediction mode, a prediction vector of the current block as a displacement vector of the current block, and encoding a residual coefficient of the current block; or decoding, when the displacement vector prediction mode indication information indicates that the current block uses a new motion vector prediction mode, the code stream to obtain a displacement vector residual of the current block, determining a displacement vector of the current block according to the displacement vector residual and the prediction vector of the current block, and encoding a residual coefficient of the current block.

In some embodiments, the decoding the code stream to obtain displacement vector prediction mode indication information includes: when it is determined, according to the length of the prediction vector candidate list, that the displacement vector prediction mode indication information needs to be decoded, decoding the code stream to obtain the displacement vector prediction mode indication information.

In some embodiments, the decoding, when the displacement vector prediction mode indication information indicates that the current block uses a new motion vector prediction mode, the code stream to obtain a displacement vector residual of the current block includes: decoding the code stream to obtain a symbol and a value of the displacement vector of the current block.

In some embodiments, the decoding, when the displacement vector prediction mode indication information indicates that the current block uses a new motion vector prediction mode, the code stream to obtain a displacement vector residual of the current block includes: decoding the code stream to obtain joint type indication information, the joint type indication information being used for indicating component consistency between the displacement vector residual of the current block and the prediction vector of the current block, and performing decoding to obtain the displacement vector residual of the current block according to the joint type indication information.

Implementation details of the foregoing video encoding method are similar to implementation details of the foregoing video decoding method in the foregoing embodiment, and details are not described again.

In general, in the technical solution of this embodiment of the present disclosure, a more suitable prediction vector candidate list may be constructed according to displacement vectors of a decoded block whose reference frame is a current frame, so as to ensure that a more accurate prediction vector is selected therefrom, thereby improving encoding performance. In addition, a proper default prediction vector derivation method may be selected according to a reference range type, so as to select corresponding prediction vectors for different reference ranges, thereby improving accuracy of vector prediction, reducing an encoding cost of a displacement vector, and improving encoding performance.

The following describes in detail implementation details of the technical solutions in the embodiments of the present disclosure again from a perspective of a decoder.

In some embodiments, when a current block is decoded, a displacement vector of the current block needs to be decoded. The following uses an example in which the current block is an IBC block, and the displacement vector of the IBC block is a block vector bv (bv_x, bv_y).

In some embodiments, a code stream may include bvp_mode, indicating a block vector prediction mode used, and the following prediction modes may be used alone or in combination:

A) The block vector prediction mode includes a skip prediction mode. In this prediction mode, a bv of a current block is equal to a prediction block vector (Block Vector Prediction, bvp), a residual coefficient of the current block is 0 by default, and decoding does not need to be performed.

B) The block vector prediction mode includes a near motion vector (NearMV) prediction mode. In this prediction mode, a bv of the current block is equal to a bvp, but the residual coefficient of the current block needs to be decoded.

C) The block vector prediction mode includes a new motion vector (NewMV) prediction mode. In this prediction mode, a block vector difference (bvd) needs to be decoded, the bv of the current block=bvd+bvp, and the residual coefficient of the current block needs to be decoded.

In some embodiments, the bvd may be decoded directly, that is, the code stream is decoded to obtain a symbol and an absolute value of the bvd. Alternatively, decoding manners of the bvd may be classified into several types, and then joint_type is first decoded to determine a category, and then the bvd is decoded. For example, there are the following four cases: (1) Both components of the bvd are consistent with those of the bvp, and the bvd does not need to be decoded. (2) A horizontal component of the bvd is consistent with that of the bvp, but their vertical components are inconsistent. In this case, only the vertical component of the bvd needs to be decoded. (3) The horizontal component of the bvd is inconsistent with that of the bvp, and their vertical components are consistent. In this case, only the horizontal component of the bvd needs to be decoded. (4) Both components of the bvd are inconsistent with those of the bvp. In this case, the horizontal component and the vertical component of the bvd need to be decoded from the code stream.

In an embodiment of the present disclosure, the bvp of the current block may be derived from a prediction block vector candidate list. For example, a prediction block vector index bvp_index may be decoded, and then the bvp of the current block is derived according to a location of the bvp in the prediction block vector candidate list indicated by the bvp_index. Alternatively, the bvp may be derived according to a fixed rule sequence, and the index does not need to be decoded. For example, the first two candidate bvps in the prediction block vector candidate list are checked, and then the first candidate bvp that is not 0 is exported as the bvp of the current block.

If the code stream includes reference range category indication information ibc_ref_type used for indicating a reference range in which a reference block of the current IBC block is located, the bvp of the corresponding category needs to be used. For example, if it is indicated that the reference block of the current IBC block is within a global reference range, a bvp corresponding to the global reference range needs to be used. If it is indicated that the reference block of the current IBC block is within a local reference range, a bvp corresponding to the local reference range needs to be used.

The ibc_ref_type belongs to block-level reference range category indication information, and image-level reference range category indication information or tile-level reference range category indication information may alternatively be included, so as to respectively indicate a reference range of an IBC block in a current image or a current tile. Certainly, the indication may also be performed by using multi-level reference range category indication information, for example, by using image-level reference range category indication information and block-level reference range category indication information.

In an embodiment of the present disclosure, a method for constructing the prediction block vector candidate list bvp_list is as follows:

1. The prediction block vector candidate list bvp_list may include block vector information of space-domain adjacent decoded blocks, that is, space based block vector prediction (SBVP).

For example, SBVP with a length of N1 may be constructed, to record BVs of space-domain adjacent decoded IBC blocks in a specified sequence.

The space-domain adjacent decoded IBC blocks include decoded blocks in N1 rows above the current block or in N2 columns on the left of the current block, and N1 and N2 are positive integers. The specified sequence may be a decoding sequence or a scanning sequence of space-domain adjacent decoded IBC blocks, weights corresponding to displacement vectors of the space-domain adjacent decoded IBC blocks, or the like. The weight corresponding to the displacement vector may be associated with at least one of the following factors: a repetition quantity of a displacement vector, a block size corresponding to a displacement vector, and a block location corresponding to a displacement vector.

In some embodiments, the SBVP may be constructed according to a reference range type of the bv (e.g., a global reference range or a local reference range), for example, may include only a bv of a reference block within a corresponding reference range.

2. The prediction block vector candidate list bvp_list may include block vector information of a historical decoded block, that is, history based block vector prediction (HBVP).

For example, HBVP with a length of N2 may be constructed, and a BV of a decoded IBC block (or a BV of a decoded block whose reference frame is a current frame) is recorded in a specified sequence. Each time decoding of one IBC block is completed, a bv of the decoded block is added to the HBVP in a sequence of first input first output (FIFO), where the decoding sequence has a higher priority than a bv adjacent to the current block.

A duplicate checking operation can be performed when the bv is inserted into the HBVP. If a BV that is duplicate with a new BV that needs to be inserted exists in the list, the BV that is duplicate in the HBVP is deleted.

In some embodiments, the HBVP may have a check count limit. For an SB, an SB row, or a tile, when a quantity of BVs added to the HBVP exceeds a preset value, adding the BV of the decoded block to the HBVP may be stopped. In addition, the HBVP can be reset according to the SB, the SB row, or tile.

The bv in the HBVP may also have different sorting sequences, for example, according to a decoding sequence of decoded IBC blocks, a scanning sequence of decoded IBC blocks, and weights corresponding to displacement vectors of decoded IBC blocks. The weight corresponding to the displacement vector may be associated with at least one of the following factors: a repetition quantity of a displacement vector, a block size corresponding to a displacement vector, and a block location corresponding to a displacement vector.

3. The prediction block vector candidate list bvp_list may be formed by a combination of the SBVP or the HBVP.

If bvp_list is constructed together by the SBVP and the HBVP, a duplicate checking operation can be performed so that the list does not contain duplicate instances. In addition, if the code stream includes the reference range category indication information (which may be block-level reference range category indication information ibc_ref_type, or may be image-level or tile-level reference range category indication information), the following method may be used for constructing bvp_list:

bvp_list is constructed by using a bv of a decoded IBC block within a reference range indicated by reference range category indication information of a reference block; or the reference block of the current IBC block is first calculated by using the bv of the decoded block, and then the bv of the decoded block is used for constructing bvp_list only when the reference block is within the reference range indicated by the reference range category indication information.

It can be learned that in this embodiment of the present disclosure, the code stream includes one or more of reference range category indication information, bvp_mode, and bvp_index. The following uses an example in which the reference range category indication information is ibc_ref_type to describe this embodiment of the present disclosure.

In some embodiments, the code stream includes ibc_ref_type, bvp_mode, and bvp_index.

A processing process of the decoder is: decoding ibc_ref_type. If a value of ibc_ref_type is 0, it indicates that the reference block of the current IBC block is located within a local reference range; otherwise, the reference block of the current IBC block is located within a global reference range.

bvp_mode is decoded, and a block vector prediction mode used is determined according to a value of bvp_mode: If the value of bvp_mode is 0, it indicates that the skip mode is used, and bv of the current block=bvp, and decoding of the residual coefficient is skipped. If the value of bvp_mode is 1, it indicates that the NearMV mode is used, and bv of the current block=bvp. If the value of bvp_mode is 2, it indicates that the NewMV mode is used, and decoding is performed based on a category (i.e., joint_type) method to obtain bvd, where bv of the current block=bvd+bvp.

bvp_index is decoded to determine a location of the bvp in bvp_list.

In this embodiment, a maximum length of the constructed bvp_list is 8. During construction, only a candidate construction prediction block vector candidate list corresponding to ibc_ref_type is used. In addition, a candidate bv adjacent in a space domain or a candidate bv adjacent in a historical encoding sequence is allowed. For example, the candidate bv in the SBVP may be added to bvp_list first. If the bvp_list list is not fully filled, the candidate bv in the HBVP is added.

In some embodiments, the code stream includes bvp_mode and bvp_index.

In this embodiment, there are two block vector prediction modes, including the NearMV mode and the NewMV mode. The location of the bvp in bvp_list can be determined according to bvp_index, and then the bvp can be determined.

In this embodiment, a maximum length of the constructed bvp_list is 8. In specific construction, only a candidate bv in the SBVP may be used.

In some embodiments, the code stream includes bvp_index.

In this embodiment, the block vector prediction mode has only one prediction mode NewMV mode. The location of the bvp in bvp_list can be determined according to bvp_index, and then the bvp can be determined.

In this embodiment, a maximum length of the constructed bvp_list is 8. In specific construction, only a candidate bv in the SBVP may be used.

In some embodiments, the code stream includes a flag indicating a reference range, bvp_mode, and bvp_idx.

In some embodiments, flags indicating a reference range may be allowed_global_intrabc and allowed_local_intrabc, respectively indicating whether a global reference range or a local reference range is allowed for a block in a current image or a current tile.

For example, if a value of allowed_global_intrabc is 1, it indicates that a global reference range is allowed to be used. If the value of allowed_global_intrabc is 0, it indicates that a global reference range is not allowed to be used. If a value of allowed_local_intrabc is 1, it indicates that a local reference range is allowed to be used. If the value of allowed_local_intrabc is 0, it indicates that a local reference range is not allowed to be used.

In addition to decoding the flag indicating a reference range, the decoder further includes:

decoding bvp_mode to determine the mode used, for example, which may include two modes. 0 indicates the NewMV mode and 1 indicates the NearMV mode.

bvp_index is decoded to determine a location of the bvp in bvp_list.

In this embodiment, the maximum length of the constructed bvp_list is 4, and bvp_list includes the SBVP and the HBVP. If the length of the list is less than 4, bvp_list is filled according to the reference range, which is specifically as follows:

A) If a global reference range and a local reference range are allowed to be used, {(0, -sb_h), (-sb_w - D, 0), (0, -h'), and (-w', 0)} may be added to the prediction vector candidate list, where a size of SB is 128, and D is 256;

B) If only a local reference range is allowed to be used, {(0, -h'), (-w', 0), (-w', -h'), (0, -2×h')} may be added to the prediction vector candidate list;

C) If only a global reference range is allowed, {(0, -sb_h), (-sb_w-D, 0), (-sb_w, -sb_h), (-2×sb_w, -sb_h) } may be added to the prediction vector candidate list, where a size of SB is 128, and D is 256;

D) When the prediction vector candidate list is filled, a duplicate checking operation may be performed, and a duplicate prediction vector is deleted.

$$w'=\min(b\_w, 64); \quad h'=\min(b\_h, 64).$$

In conclusion, in the technical solution of this embodiment of the present disclosure, a proper default prediction vector derivation method may be selected according to a reference range type, so as to select corresponding prediction vectors for different reference ranges, thereby improving accuracy of vector prediction, reducing an encoding cost of a displacement vector, and improving encoding performance. In addition, a more suitable prediction vector candidate list may be constructed according to displacement vectors of a decoded block whose reference frame is a current frame, so as to ensure that a more accurate prediction vector is selected therefrom, thereby improving encoding performance.

The following describes the apparatus embodiments of the present disclosure, which may be configured to perform the method in the foregoing embodiments of the present disclosure. For details not disclosed in the apparatus embodiments of the present disclosure, references may be made to the foregoing method embodiments of the present disclosure.

FIG. 13 is a block diagram of a video decoding apparatus according to an embodiment of the present disclosure. The video decoding apparatus may be disposed in a device that has a computing and processing function. For example, the video decoding apparatus may be disposed in a terminal device or a server.

Referring to FIG. 13, the video decoding apparatus 1300 according to an embodiment of the present disclosure includes a first generation unit 1302, a first selection unit 1304, and a first processing unit 1306.

The first generation unit 1302 is configured to generate a prediction vector candidate list according to displacement vectors of a decoded block whose reference frame is a current frame; the first selection unit 1304 is configured to select a prediction vector of a to-be-decoded current block from the prediction vector candidate list; and the first processing unit 1306 is configured to decode the current block based on the prediction vector of the current block.

In some embodiments, the first selection unit 1304 is configured to: decode a code stream to obtain prediction vector index information, and select a prediction vector from a corresponding location in the prediction vector candidate list according to the prediction vector index information as the prediction vector of the current block.

In some embodiments, the first selection unit 1304 is further configured to: determine whether the prediction vector index information needs to be decoded according to a length of the prediction vector candidate list, and if it is determined that the prediction vector index information needs to be decoded, decode the code stream to obtain the prediction vector index information.

In some embodiments, the prediction vector index information is encoded using a context-based multi-symbol arithmetic.

In some embodiments, the code stream includes a maximum value of the prediction vector index information, and the maximum value is located in a sequence header, an image header, or a tile header; and maximum values corresponding to different displacement vector prediction modes are the same or different.

In some embodiments, the first selection unit 1304 is configured to select a prediction vector from the prediction vector candidate list as the prediction vector of the current block according to a specified selection policy.

In some embodiments, the first generation unit 1302 is configured to: obtain displacement vectors of a decoded block adjacent to the current block from the displacement vectors of the decoded block whose reference frame is the current frame; sort the displacement vectors of the decoded block adjacent to the current block in a specified sequence to generate a first displacement vector list; and generate the prediction vector candidate list according to the first displacement vector list.

In some embodiments, the adjacent decoded blocks include at least one of the following: decoded blocks in n1 rows above the current block, or decoded blocks in n2 columns on the left of the current block; and n1 and n2 are positive integers.

In some embodiments, the first generation unit 1302 is configured to: obtain displacement vectors of a historical decoded block from the displacement vectors of the decoded block whose reference frame is the current frame; add the displacement vectors of the historical decoded block to a queue of a specified length in a first-in first-out manner according to a specified sequence, to generated a second displacement vector list; and generate the prediction vector candidate list according to the second displacement vector list.

In some embodiments, the first generation unit 1302 is further configured to: delete, when the displacement vectors of the historical decoded block are added to the queue, and a same displacement vector already exists in the queue, the same displacement vector already existing in the queue.

In some embodiments, one second displacement vector list corresponds to at least one to-be-decoded area, and the to-be-decoded area includes one of the following: a maximum code block in which the current block is located, a row in the maximum code block in which the current block is located, and a tile in which the current block is located.

In some embodiments, the first generation unit 1302 is further configured to: stop, when a displacement vector in a second displacement vector list corresponding to a target to-be-decoded area exceeds a specified value, adding a displacement vector to the second displacement vector list corresponding to the target to-be-decoded area.

In some embodiments, the first generation unit 1302 is further configured to: stop, when a quantity of times of adding a displacement vector to a second displacement vector list corresponding to a target to-be-decoded area exceeds a specified quantity of times, adding a displacement vector to the second displacement vector list corresponding to the target to-be-decoded area.

In some embodiments, the first generation unit 1302 is configured to: obtain displacement vectors of a decoded block adjacent to the current block from the displacement vectors of the decoded block whose reference frame is the current frame; sort the displacement vectors of the decoded block adjacent to the current block in a specified sequence to generate a first displacement vector list; obtain displacement vectors of a historical decoded block from the displacement vectors of the decoded block whose reference frame is the current frame, and add the displacement vectors of the historical decoded block to a queue of a specified length in a first-in first-out manner according to a specified sequence, to generate a second displacement vector list; and generate the prediction vector candidate list according to the first displacement vector list and the second displacement vector list.

In some embodiments, the first generation unit 1302 is configured to: merge the first displacement vector list and the second displacement vector list, and delete a duplicate displacement vector to generate the prediction vector candidate list.

In some embodiments, the first generation unit 1302 is further configured to: detect whether a displacement vector not in a preset area exists in the first displacement vector list and the second displacement vector list, where the preset area includes at least one of the following: a current image, a current tile, a current global reference range, and a current local reference range; and in a process of merging the first displacement vector list and the second displacement vector list, delete the displacement vector not in the preset area.

In some embodiments, the specified sequence includes one of the following: a decoding sequence of decoded blocks, a scanning sequence of decoded blocks, a type of a decoded block, and a weight of a displacement vector; and the weight is associated with at least one of the following factors: a repetition quantity of a displacement vector, a block size corresponding to a displacement vector, and a block location corresponding to a displacement vector.

In some embodiments, the video decoding apparatus further includes a decoding unit. The decoding unit is configured to: decode a code stream to obtain reference range category indication information, the reference range category indication information being used for indicating a target reference range used in an intra-frame block replication mode, and the target reference range including at least one of a global reference range and a local reference range; and the first selection unit 1304 is configured to: select a prediction vector corresponding to the target reference range from the prediction vector candidate list.

In some embodiments, the first generation unit 1302 is configured to: obtain, from the displacement vectors of the decoded block whose reference frame is the current frame, a target decoded block whose corresponding reference block is in the target reference range and uses an intra-frame block replication mode; and generate the prediction vector candidate list according to a displacement vector of the target decoded block.

In some embodiments, the first generation unit 1302 is configured to: calculate a reference block of the current block according to the displacement vectors of the decoded block whose reference frame is the current frame; determine a target reference block that is in the reference block of the current block and that is in the target reference range; and generate the prediction vector candidate list according to a displacement vector of a decoded block corresponding to the target reference block.

In some embodiments, the reference range category indication information is image-level reference range category indication information or tile-level reference range category indication information; and the first generation unit 1302 is further configured to: fill, when a quantity of displacement vectors included in the prediction vector candidate list does not reach a specified quantity, a preset block vector into the prediction vector candidate list according to the image-level reference range category indication information or the tile-level reference range category indication information.

In some embodiments, the video decoding apparatus further includes a decoding unit, configured to decode the code stream to obtain displacement vector prediction mode indication information; and the first processing unit 1306 is configured to: use, when the displacement vector prediction mode indication information indicates that the current block uses a skip prediction mode, a prediction vector of the current block as a displacement vector of the current block, and skip a decoding process of a residual coefficient of the current block, so as to decode the current block.

In some embodiments, the first processing unit 1306 is configured to use, when the displacement vector prediction mode indication information indicates that the current block uses a NearMV prediction mode, a prediction vector of the current block as a displacement vector of the current block, and decode a residual coefficient of the current block, so as to decode the current block.

In some embodiments, the first processing unit 1306 is configured to decode, when the displacement vector prediction mode indication information indicates that the current block uses a NewMV prediction mode, the code stream to obtain a displacement vector residual of the current block, calculate a displacement vector of the current block according to the displacement vector residual and the prediction vector of the current block, and decode a residual coefficient of the current block, so as to decode the current block.

In some embodiments, the decoding unit is further configured to: determine, according to a length of the prediction vector candidate list, whether the displacement vector prediction mode indication information needs to be decoded; and if it is determined that the displacement vector prediction mode indication information needs to be decoded, decode the code stream to obtain the displacement vector prediction mode indication information.

In some embodiments, a process in which the first processing unit 1306 decodes the code stream to obtain the displacement vector residual of the current block includes: decoding the code stream to obtain a symbol and a value of the displacement vector of the current block; or decoding the code stream to obtain joint type indication information, the joint type indication information being used for indicating component consistency between the displacement vector residual of the current block and the prediction vector of the current block, and performing decoding to obtain the displacement vector residual of the current block according to the joint type indication information.

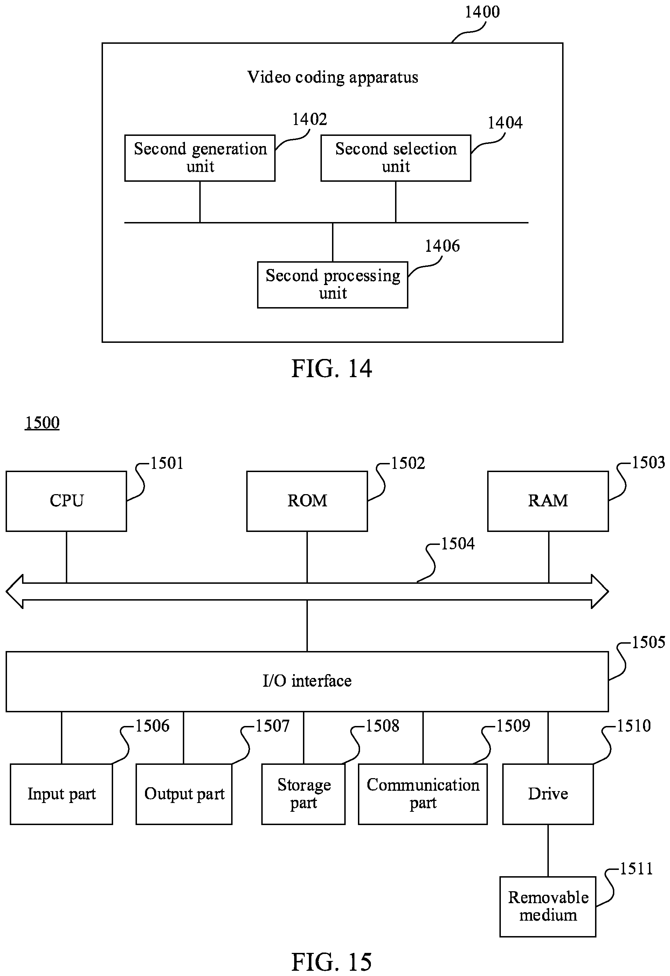

FIG. 14 is a block diagram of a video encoding apparatus according to an embodiment of the present disclosure. The video encoding apparatus may be disposed in a device that has a computing and processing function, for example, may be disposed in a terminal device or a server.

Referring to FIG. 14, the video encoding apparatus 1400 according to an embodiment of the present disclosure includes a second generation unit 1402, a second selection unit 1404, and a second processing unit 1406.

The second generation unit 1402 is configured to generate a prediction vector candidate list according to displacement vectors of an encoded block whose reference frame is a current frame; the second selection unit 1404 is configured to select a prediction vector of a to-be-coded current block from the prediction vector candidate list; and the second processing unit 1406 is configured to code the current block based on the prediction vector of the current block.

FIG. 15 is a schematic structural diagram of a computer system adapted to implement an electronic device according to an embodiment of the present disclosure.

A computer system 1500 of the electronic device shown in FIG. 15 is merely an example, and does not constitute any limitation on functions and use ranges of the embodiments of the present disclosure.

As shown in FIG. 15, the computer system 1500 includes a central processing unit (CPU) 1501, which may perform various suitable actions and processing based on a program stored in a read-only memory (ROM) 1502 or a program loaded from a storage part 1508 into a random access memory (RAM) 1503, for example, perform the method described in the foregoing embodiments. The RAM 1503 further stores various programs and data required for operating the system. The CPU 1501, the ROM 1502, and the RAM 1503 are connected to each other through a bus 1504. An input/output (I/O) interface 1505 is also connected to the bus 1504.

The following parts are connected to the I/O interface 1505: an input part 1506 including a keyboard, a mouse, and the like; an output part 1507 including, for example, a cathode ray tube (CRT), a liquid crystal display (LCD), a speaker, and the like; a storage part 1508 including a hard disk or the like; and a communication part 1509 including a network interface card such as a local area network (LAN) card and a modem. The communication part 1509 performs communication processing by using a network such as the Internet. A driver 1510 is also connected to the I/O interface 1505 as required. A removable medium 1511, such as a magnetic disk, an optical disc, a magneto-optical disk, or a semiconductor memory, is installed on the drive 1510 as required, so that a computer program read from the removable medium is installed into the storage part 1508 as required.

According to an embodiment of the present disclosure, the processes described in the following by referring to the flowcharts may be implemented as computer software programs. For example, an embodiment of the present disclosure includes a computer program product. The computer program product includes a computer program stored in a computer readable storage medium. The computer program includes a computer program used for performing a method shown in the flowchart. In such an embodiment, by using the communication part 1509, the computer program may be downloaded and installed from a network, and/or installed from the removable medium 1511. When the computer program is executed by the CPU 1501, the various functions defined in the system of the present disclosure are executed.

The computer readable storage medium shown in this embodiment of the present disclosure may be a memory such as a read-only memory (ROM), a random access memory (RAM), an erasable programmable read-only memory (EPROM), an electrically erasable programmable read-only memory (EEPROM), a flash memory, a magnetic surface memory, an optical disc, or a CD-ROM; or may be various devices including one or any combination of the foregoing memories.

A related unit described in the embodiments of the present disclosure may be implemented in a software manner, or may be implemented in a hardware manner, and the unit described can also be set in a processor. Names of the units do not constitute a limitation on the units in a specific case.

An embodiment of the present disclosure further provides a computer readable storage medium. The computer readable storage medium may be included in the electronic device described in the foregoing embodiment; or may exist separately, and is not assembled into the electronic device. The computer readable storage medium carries one or more programs, the one or more programs, when executed by the electronic device, causing the electronic device to implement the method described in the foregoing embodiments.

Although a plurality of modules or units of a device configured to perform actions are discussed in the foregoing detailed description, such division is not mandatory. Actually, according to the implementations of the present disclosure, the features and functions of two or more modules or units described above may be implemented in one module or unit. On the contrary, the features and functions of one module or unit described above may be divided to be embodied by a plurality of modules or units.

According to the foregoing descriptions of the implementations, a person skilled in the art may readily understand that the exemplary implementations described herein may be implemented by using software, or may be implemented by combining software and necessary hardware. Therefore, the technical solutions of the embodiments of the present disclosure may be implemented in a form of a software product. The software product may be stored in a non-volatile storage medium (which may be a CD-ROM, a USB flash drive, a removable hard disk, or the like) or on the network, including several instructions for instructing a computing device (which may be a personal computer, a server, a touch terminal, a network device, or the like) to perform the methods according to the embodiments of the present disclosure.

After considering the specification and practicing the implementations of the present disclosure, a person skilled in the art may easily conceive of other implementations of the present disclosure. The present disclosure is intended to cover any variations, uses, or adaptations of the present disclosure. These variations, uses, or adaptations follow the general principles of the present disclosure and include common knowledge or conventional technical means in the art that are not disclosed in the present disclosure.

It is to be understood that the present disclosure is not limited to the precise structures described above and shown in the accompanying drawings, and various modifications and changes can be made without departing from the scope of the present disclosure. The scope of the present disclosure is limited only by the appended claims.

**Claims**

1. A video decoding method, comprising:

   generating a prediction vector candidate list according to displacement vectors of a decoded block whose reference frame is a current frame;
   selecting a prediction vector of a to-be-decoded current block from the prediction vector candidate list; and
   decoding the current block based on the prediction vector of the current block.

2. The video decoding method according to claim 1, wherein the selecting a prediction vector of a to-be-decoded current block from the prediction vector candidate list comprises:

   decoding a code stream to obtain prediction vector index information; and
   selecting, according to the prediction vector index information, a prediction vector from a corresponding location in the prediction vector candidate list as the prediction vector of the to-be-decoded current block.

3. The video decoding method according to claim 2, wherein the decoding a code stream to obtain prediction vector index information comprises:
   decoding, when it is determined, according to the length of the prediction vector candidate list, that the prediction vector index information needs to be decoded, the code stream to obtain the prediction vector index information.

4. The video decoding method according to claim 2 or 3, wherein the prediction vector index information is encoded by using a context-based multi-symbol arithmetic.

5. The video decoding method according to claim 2, wherein the code stream comprises a maximum value of the prediction vector index information, and the maximum value is located in a sequence header, an image header, or a tile header; and

maximum values corresponding to different displacement vector prediction modes are the same or different.

6. The video decoding method according to claim 1, wherein the selecting a prediction vector of a to-be-decoded current block from the prediction vector candidate list comprises:

selecting, according to a specified selection policy, a prediction vector from the prediction vector candidate list as the prediction vector of the to-be-decoded current block.

7. The video decoding method according to claim 1, wherein the generating a prediction vector candidate list according to displacement vectors of a decoded block whose reference frame is a current frame comprises:

obtaining displacement vectors of a decoded block adjacent to the current block from the displacement vectors of the decoded block whose reference frame is the current frame;

sorting the displacement vectors of the decoded block adjacent to the current block in a specified sequence to obtain a first displacement vector list; and

generating the prediction vector candidate list according to the first displacement vector list.

8. The video decoding method according to claim 7, wherein the adjacent decoded blocks comprise at least one of the following: one or more decoded blocks in $n_1$ rows above the current block, or one or more decoded blocks in $n_2$ columns on the left of the current block; and

wherein $n_1$ and $n_2$ are positive integers.

9. The video decoding method according to claim 1, wherein the generating a prediction vector candidate list according to displacement vectors of a decoded block whose reference frame is a current frame comprises:

obtaining, from the displacement vectors of the decoded block whose reference frame is the current frame, displacement vectors of a historical decoded block;

adding the displacement vectors of the historical decoded block to a queue of a specified length in a first-in first-out manner according to a specified sequence, to obtain a second displacement vector list; and

generating the prediction vector candidate list according to the second displacement vector list.

10. The video decoding method according to claim 9, further comprising:

when the displacement vectors of the historical decoded block are added to the queue, and if a same displacement vector already exists in the queue, deleting the same displacement vector already existing in the queue.

11. The video decoding method according to claim 9, wherein one second displacement vector list corresponds to at least one to-be-decoded area, and the to-be-decoded area comprises one of the following:

a maximum code block in which the current block is located, a row in the maximum code block in which the current block is located, and a tile in which the current block is located.

12. The video decoding method according to claim 11, further comprising:

when a displacement vector in a second displacement vector list corresponding to a target to-be-decoded area exceeds a specified value, stopping adding a displacement vector to the second displacement vector list corresponding to the target to-be-decoded area; or

when a quantity of times of adding a displacement vector to a second displacement vector list corresponding to a target to-be-decoded area exceeds a specified quantity of times, stopping adding a displacement vector to the second displacement vector list corresponding to the target to-be-decoded area.

13. The video decoding method according to claim 1, wherein the generating a prediction vector candidate list according to displacement vectors of a decoded block whose reference frame is a current frame comprises:

obtaining displacement vectors of a decoded block adjacent to the current block from the displacement vectors of the decoded block whose reference frame is the current frame, and sorting the displacement vectors of the decoded block adjacent to the current block in a specified sequence to obtain a first displacement vector list;

obtaining displacement vectors of a historical decoded block from the displacement vectors of the decoded block whose reference frame is the current frame, and adding the displacement vectors of the historical decoded block to a queue of a specified length in a first-in first-out manner according to a specified sequence, to obtain a second displacement vector list; and

generating the prediction vector candidate list according to the first displacement vector list and the second displacement vector list.

14. The video decoding method according to claim 13, wherein the generating the prediction vector candidate list according to the first displacement vector list and the second displacement vector list comprises:

merging the first displacement vector list and the second displacement vector list to obtain a merged displacement vector list; and

removing a duplicate displacement vector from the merged displacement vector list to obtain the prediction vector candidate list.

15. The video decoding method according to claim 14, further comprising:

detecting displacement vectors in the first displacement vector list and the second displacement vector list; and

deleting a displacement vector not in a preset area in a process of merging the first displacement vector list and the second displacement vector list;

wherein the preset area comprises at least one of the following: a current image, a current tile, a current global reference range, and a current local reference range.

16. The video decoding method according to claim 7, 8, or 13, wherein the specified sequence comprises one of the following: a decoding sequence of decoded blocks, a scanning sequence of decoded blocks, a type of a decoded block, and a weight of a displacement vector; and

the weight is associated with at least one of the following factors: a repetition quantity of a displacement vector, a block size corresponding to a displacement vector, and a block location corresponding to a displacement vector.

17. The video decoding method according to claim 1, further comprising:

decoding a code stream to obtain reference range category indication information, the reference range category indication information being used for indicating a target reference range used in an intra-frame block replication mode, and the target reference range comprising at least one of a global reference range and a local reference range; and

the selecting a prediction vector of a to-be-decoded current block from the prediction vector candidate list comprises:

selecting, from the prediction vector candidate list, a prediction vector corresponding to the target reference range as the prediction vector of the to-be-decoded current block.

18. The video decoding method according to claim 17, wherein the generating a prediction vector candidate list according to displacement vectors of a decoded block whose reference frame is a current frame comprises:

obtaining, from the displacement vectors of the decoded block whose reference frame is the current frame, a target decoded block whose corresponding reference block is in the target reference range and uses an intra-frame block replication mode; and

generating the prediction vector candidate list according to a displacement vector of the target decoded block.

19. The video decoding method according to claim 17, wherein the generating a prediction vector candidate list according to displacement vectors of a decoded block whose reference frame is a current frame comprises:

determining a reference block of the current block according to the displacement vectors of the decoded block whose reference frame is the current frame;

determining a target reference block in the target reference range from the reference block of the current block; and

generating the prediction vector candidate list according to a displacement vector of a decoded block corresponding to the target reference block.

20. The video decoding method according to claim 17, wherein the reference range category indication information is image-level reference range category indication information or tile-level reference range category indication information; and the video decoding method further comprises:

filling, when a quantity of displacement vectors in the prediction vector candidate list does not reach a specified quantity, a preset block vector into the prediction vector candidate list according to the image-level reference range category indication information or the tile-level reference range category indication information.

21. The video decoding method according to any one of claims 1 to 3, 5 to 15, and 17 to 20, wherein the video decoding method further comprises: decoding the code stream to obtain displacement vector prediction mode indication information; and

the decoding the current block based on the prediction vector of the current block comprises:

using, when the displacement vector prediction mode indication information indicates that the current block uses a skip prediction mode, a prediction vector of the current block as a displacement vector of the current block, and skipping a decoding process of a residual coefficient of the current block;

using, when the displacement vector prediction mode indication information indicates that the current block uses a near motion vector prediction mode, a prediction vector of the current block as a displacement vector of the current block, and decoding a residual coefficient of the current block; or

decoding, when the displacement vector prediction mode indication information indicates that the current block uses a new motion vector prediction mode, the code stream to obtain a displacement vector residual of the current block, determining a displacement vector of the current block according to the displacement vector residual and the prediction vector of the current block, and decoding a residual coefficient of the current block.

22. The video decoding method according to claim 21, wherein the decoding the code stream to obtain displacement vector prediction mode indication information comprises:

decoding, when it is determined, according to the length of the prediction vector candidate list, that the displacement vector prediction mode indication information needs to be decoded, the code stream to obtain the displacement vector prediction mode indication information.

23. The video decoding method according to claim 21, wherein the decoding, when the displacement vector prediction mode indication information indicates that the current block uses a new motion vector prediction mode, the code stream to obtain a displacement vector residual of the current block comprises:

decoding the code stream to obtain a symbol and a value of the displacement vector of the current block; or

decoding the code stream to obtain joint type indication information, the joint type indication information being used for indicating component consistency between the displacement vector residual of the current block and the prediction vector of the current block, and performing decoding to obtain the displacement vector residual of the current block according to the joint type indication information.

24. A video encoding method, comprising:

generating a prediction vector candidate list according to displacement vectors of an encoded block whose reference frame is a current frame;

selecting a prediction vector of a to-be-coded current block from the prediction vector candidate list; and

coding the current block based on the prediction vector of the current block.

25. A video decoding apparatus, comprising:

a first generation unit, configured to generate a prediction vector candidate list according to displacement vectors of a decoded block whose reference frame is a current frame;

a first selection unit, configured to select a prediction vector of a to-be-decoded current block from the prediction vector candidate list; and

a first processing unit, configured to decode the current block based on the prediction vector of the current block.

26. A video encoding apparatus, comprising:

a second generation unit, configured to generate a prediction vector candidate list according to displacement vectors of an encoded block whose reference frame is a current frame;

a second selection unit, configured to select a prediction vector of a to-be-coded current block from the prediction vector candidate list; and

a second processing unit, configured to code the current block based on the prediction vector of the current block.

27. A computer readable storage medium, storing a computer program, and when being executed by a processor, the computer program implementing the video decoding method according to any one of claims 1 to 23, or implementing the video encoding method according to claim 24.

28. An electronic device, comprising:

one or more processors; and
a memory, configured to store one or more programs, when the one or more programs are executed by the one or more processors, the electronic device implementing the video decoding method according to any one of claims 1 to 23, or implementing the video encoding method according to claim 24.

29. A computer program product, comprising computer instructions, the computer instructions being stored in a computer readable storage medium, and a processor of an electronic device reading and executing the computer instructions from the computer readable storage medium, so that the electronic device performs the video decoding method according to any one of claims 1 to 23, or implements the video encoding method according to claim 24.

FIG. 1

FIG. 2

Multimedia data
frame

| SB1 | SB2 | SB3 | SB4 | SB5 | SB6 |
|------|------|------|------|------|------|
| SB7 | SB8 | SB9 | SB10 | SB11 | SB12 |
| SB13 | SB14 | SB15 | SB16 | SB17 | SB18 |

FIG. 3

FIG. 4

FIG. 5

FIG. 6

FIG. 7

FIG. 8

FIG. 9

FIG. 10

Decode a code stream to obtain reference range category indication information, the reference range category indication information being used for indicating a target reference range used in an intra-frame block replication mode, and the target reference range including at least one of a global reference range and a local reference range

S1110

Generate a prediction vector candidate list according to displacement vectors of a decoded block whose reference frame is a current frame

S1120

Select a prediction vector corresponding to the target reference range from the prediction vector candidate list

S1130

Decode the current block based on the prediction vector of the current block

S1140

FIG. 11

Generate a prediction vector candidate list according to displacement vectors of a coded block whose reference frame is a current frame

S1210

Select a prediction vector of a to-be-coded current block from the prediction vector candidate list

S1220

Code the current block based on the prediction vector of the current block

S1230

## FIG. 12

1300

Video decoding apparatus

1302

First generation unit

1304

First selection unit

1306

First processing unit

## FIG. 13

1400

Video coding apparatus

1402

Second generation unit

1404

Second selection unit

1406

Second processing unit

FIG. 14

1500

1501

CPU

1502

ROM

1503

RAM

1504

1505

I/O interface

1506

Input part

1507

Output part

1508

Storage part

1509

Communication part

1510

Drive

1511

Removable medium

FIG. 15

## INTERNATIONAL SEARCH REPORT

| International application No. |
|---|
| **PCT/CN2022/135499** |

### A. CLASSIFICATION OF SUBJECT MATTER

H04N19/52(2014.01)i

According to International Patent Classification (IPC) or to both national classification and IPC

### B. FIELDS SEARCHED

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, ENTXTC, VEN, ENTXT, WOTXT, EPTXT, USTXT, JVET: 当前, 参考, 图片, 帧, 图像, 备选, 候选, 运动, 位移, 块, 串, 矢量, 范围, 区域, 表, 排序, 顺序, IBC, CPR, 帧内块复制, 帧内块拷贝, current, reference, picture, image, frame, candidate, motion, displacement, block, string, vector, area, limit, list, order, intra w block w copy, IBC, current w picture w reference, CPR

### C. DOCUMENTS CONSIDERED TO BE RELEVANT

| Category* | Citation of document, with indication, where appropriate, of the relevant passages | Relevant to claim No. |
|---|---|---|
| X | CN 113709458 A (TENCENT TECHNOLOGY (SHENZHEN) CO., LTD.) 26 November 2021 (2021-11-26)<br>description, paragraphs 41-268, and figures 7-8 | 1-14, 16, 21-29 |
| Y | CN 113709458 A (TENCENT TECHNOLOGY (SHENZHEN) CO., LTD.) 26 November 2021 (2021-11-26)<br>description, paragraphs 41-268, and figures 7-8 | 15, 17-20 |
| Y | CN 113767622 A (JVC KENWOOD CORP.) 07 December 2021 (2021-12-07)<br>description, paragraphs 287-411 | 15, 17-20 |
| Y | CN 106464896 A (HFI INNOVATION INC.) 22 February 2017 (2017-02-22)<br>description, paragraphs 19-41 | 15, 17-20 |
| A | CN 107027038 A (GOOGLE INC.) 08 August 2017 (2017-08-08)<br>entire document | 1-29 |
| A | WO 2019036080 A1 (GOOGLE L.L.C.) 21 February 2019 (2019-02-21)<br>entire document | 1-29 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 February 2023** | **28 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/135499**

| Patent document cited in search report | | | Publication date (day/month/year) | Patent family member(s) | | | Publication date (day/month/year) |
|---|---|---|---|---|---|---|---|
| CN | 113709458 | A | 26 November 2021 | None | | | |
| CN | 113767622 | A | 07 December 2021 | JP | 2022023855 | A | 08 February 2022 |
| | | | | WO | 2020256102 | A1 | 24 December 2020 |
| | | | | EP | 3989545 | A1 | 27 April 2022 |
| | | | | EP | 3989545 | A4 | 17 August 2022 |
| | | | | KR | 20210128482 | A | 26 October 2021 |
| | | | | US | 2022109829 | A1 | 07 April 2022 |
| | | | | JPWO | 2020256102 | A1 | 21 October 2021 |
| | | | | JP | 6958768 | B2 | 02 November 2021 |
| | | | | BR | 112021025852 | A2 | 08 February 2022 |
| CN | 106464896 | A | 22 February 2017 | EP | 3152906 | A1 | 12 April 2017 |
| | | | | EP | 3152906 | A4 | 06 December 2017 |
| | | | | EP | 3152906 | B1 | 16 June 2021 |
| | | | | JP | 2017525267 | A | 31 August 2017 |
| | | | | JP | 6446070 | B2 | 26 December 2018 |
| | | | | US | 2017094271 | A1 | 30 March 2017 |
| | | | | JP | 2017130938 | A | 27 July 2017 |
| | | | | JP | 6466976 | B2 | 06 February 2019 |
| | | | | US | 2017134724 | A1 | 11 May 2017 |
| | | | | US | 10869031 | B2 | 15 December 2020 |
| | | | | KR | 20170020928 | A | 24 February 2017 |
| | | | | KR | 101961384 | B1 | 25 March 2019 |
| | | | | KR | 20170029549 | A | 15 March 2017 |
| | | | | KR | 101961385 | B1 | 25 March 2019 |
| | | | | WO | 2016004850 | A1 | 14 January 2016 |
| | | | | JP | 2019083541 | A | 30 May 2019 |
| | | | | JP | 6781279 | B2 | 04 November 2020 |
| CN | 107027038 | A | 08 August 2017 | WO | 2017131908 | A1 | 03 August 2017 |
| WO | 2019036080 | A1 | 21 February 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210260543